# EUROPEAN PATENT APPLICATION

(11) **EP 4 580 187 A1**
(43) Date of publication of application: **02.07.2025**
(21) Application number: 23857782.9
(22) Date of filing: 25.08.2023
(51) Int. Cl.: H04N 19/597, H04N 19/119, H04N 19/129, H04N 19/184, H04N 19/159, H04N 21/2343, H04N 21/236, H04N 21/4402, H04N 21/434, H04N 21/81

(54) **3D DATA TRANSMISSION APPARATUS, 3D DATA TRANSMISSION METHOD, 3D DATA RECEPTION APPARATUS, AND 3D DATA RECEPTION METHOD**

(30) Priority: 25.08.2022 KR 20220106546
(71) Applicant: LG Electronics Inc., Yeongdeungpo-gu Seoul 07336 (KR)
(72) Inventor: YOON, Yeojin, Seoul 06772 (KR)
(74) Representative: Frenkel, Matthias Alexander
(86) International application number: PCT/KR2023/012643
(87) International publication number: WO 2024/043750

(57) **Abstract**

A 3D data transmission method according to embodiments may comprise the steps of: preprocessing input mesh data; encoding the preprocessed mesh data; and transmitting a bitstream including the encoded mesh data.

## Description

### [Technical Field]

Embodiments provide a method for providing 3D content to provide a user with various services such as virtual reality (VR), augmented reality (AR), mixed reality (MR), and self-driving services.

### [Background Art]

Point cloud data or mesh data in 3D content is a set of points in 3D space. However, it is difficult to create point cloud data or mesh data due to the large amount of points in 3D space.

In other words, a large throughput is required to transmit and receive 3D data with a considerable number of points, such as a point cloud or mesh data.

### [Disclosure]

### [Technical Problem]

An object of the present disclosure is to provide an apparatus and method for efficiently transmitting and receiving mesh data to resolve the aforementioned issue.

Another object of the present disclosure is to provide an apparatus and method to address the latency and encoding/decoding complexity of mesh data.

Embodiments are not limited to the above-described objects, and the scope of the embodiments may be extended to other objects that can be inferred by those skilled in the art based on the entire contents of the present disclosure.

### [Technical Solution]

To achieve these objects and other advantages and in accordance with the purpose of the invention, as embodied and broadly described herein, a method of transmitting three-dimensional (3D) data may include pre-processing input mesh data, encoding the pre-processed mesh data, and transmitting a bitstream containing the encoded mesh data.

According to embodiments, the pre-processing may include generating decimated mesh data by decimating the input mesh data, generating texture coordinates of each vertex in the decimated mesh data, and subdividing the decimated mesh data having the texture coordinates and then generating fitted subdivided mesh data similar to the input mesh data through fitting.

According to embodiments, the generating of the texture coordinates may include segmenting polygons or vertices constituting the decimated mesh data by combining polygons or vertices having similar characteristics based on characteristics of the polygons or vertices of the decimated mesh data, generating mesh patches of a current frame based on a set of the segmented polygons or vertices, and packing the mesh patches of the current frame onto a two-dimensional (2D) image based on a result of packing of mesh patches of a previous frame and generating texture coordinates of each of the vertices of the decimated mesh data.

According to embodiments, the packing may include determining whether the previous frame has a mesh patch matching a current mesh patch of the current frame, and based on that it is determined that the previous frame has the matching mesh patch, determining a mapping position of the current mesh patch on the 2D image based on a mapping position of the matching mesh patch in the previous frame, and packing the current mesh patch onto the determined mapping position on the 2D image.

According to embodiments, the current mesh patch may be packed onto the 2D image to have a same or close mapping position as the matching mesh patch in the previous frame.

According to embodiments, the mesh patches of the current frame corresponding to the matching mesh patch in the previous frame may be packed onto the 2D image first.

According to embodiments, the determining whether the previous frame has the matching mesh patch may include, based on that a mesh patch of the previous frame is in the same orientation as the current mesh patch and has a similar number of polygons and/or vertices to the current mesh patch, determining that the mesh patch of the previous frame matches the current mesh patch.

According to embodiments, the encoding may include re-generating texture coordinates based on the texture coordinates of each vertex in the decimated mesh data and the texture coordinates of each vertex in the input mesh data and performing video encoding.

According to embodiments, an apparatus for transmitting 3D data may include a pre-processor configured to pre-process input mesh data, an encoder configured to encode the pre-processed mesh data, and a transmitter configured to transmit a bitstream containing the encoded mesh data.

According to embodiments, the pre-processor may include a mesh decimation unit configured to generate decimated mesh data by decimating the input mesh data, a parameterization unit configured to generate texture coordinates of each vertex in the decimated mesh data, and a fitting subdivision surface unit configured to subdivide the decimated mesh data having the texture coordinates and then generate fitted subdivided mesh data similar to the input mesh data through fitting.

According to embodiments, the parameterization unit may include a polygon/vertex segmentation unit configured to segment polygons or vertices constituting the decimated mesh data by combining polygons or vertices having similar characteristics based on characteristics of the polygons or vertices of the decimated mesh data, a mesh patch segmentation unit configured to generate mesh patches of a current frame based on a set of the segmented polygons or vertices, and a mesh patch packer configured to pack the mesh patches of the current frame onto a two-dimensional (2D) image based on a result of packing of mesh patches of a previous frame and generating texture coordinates of each of the vertices of the decimated mesh data.

According to embodiments, the mesh patch packer performs operations may include determining whether the previous frame has a mesh patch matching a current mesh patch of the current frame, and, based on that it is determined that the previous frame has the matching mesh patch, determining a mapping position of the current mesh patch on the 2D image based on a mapping position of the matching mesh patch in the previous frame, and packing the current mesh patch onto the determined mapping position on the 2D image.

According to embodiments, the mesh patch packing unit may pack the current mesh patch onto the 2D image to have a same or close mapping position as the matching mesh patch in the previous frame.

According to embodiments, the mesh patch packing unit may pack the mesh patches of the current frame corresponding to the matching mesh patch in the previous frame onto the 2D image first.

According to embodiments, based on that a mesh patch of the previous frame is in the same orientation as the current mesh patch and has a similar number of polygons and/or vertices to the current mesh patch, the mesh patch packer may determine that the mesh patch of the previous frame matches the current mesh patch.

According to embodiments, the encoder may re-generate texture coordinates based on the texture coordinates of each vertex in the decimated mesh data and the texture coordinates of each vertex in the input mesh data, and perform video encoding.

### [Advantageous Effects]

According to embodiments, a 3D data transmission method, 3D data transmission apparatus, 3D data reception method, and 3D data reception apparatus may provide good-quality 3D services.

According to embodiments, a 3D data transmission method, 3D data transmission apparatus, 3D data reception method, and 3D data reception apparatus may achieve various video codec schemes.

According to embodiments, a 3D data transmission method, 3D data transmission apparatus, 3D data reception method, and 3D data reception apparatus may support universal 3D content, such as for autonomous driving services.

According to embodiments, a 3D data transmission method and 3D data transmission apparatus may regenerate a texture map with high image correlation between frames by reflecting image similarity between frames in generating texture coordinates of a simplified mesh. Thus, they may improve the compression performance of dynamic meshes of the V-Mesh, particularly improving the compression performance of the texture map video of the mesh. Further, the user may be allowed to use fewer resources to store, utilize, and transmit a bitstream generated after compressing the mesh data acquired with an encoder with a texture map having a high image correlation between frames, and to store and utilize the bitstream at the receiving side. As a result, the costs related to using mesh content in media and communication systems may be reduced, and the range of applications utilizing mesh content may be effectively expanded.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:
FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process for V-MESH data according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process for V-MESH data according to embodiments;
FIG. 12 illustrates an inter-frame decoding process for V-MESH data according to embodiments;
FIG. 13 illustrates a mesh data transmission apparatus according to embodiments;
FIG. 14 illustrates a mesh data reception apparatus according to embodiments;
FIG. 15 illustrates an example of a re-generated texture map video according to embodiments;
FIG. 16 is an example detailed block diagram of a parameterization unit according to embodiments;
FIG. 17 is a flowchart illustrating an example parameterization method according to embodiments;
FIG. 18 is a flowchart illustrating an example mesh patch packing method according to embodiments;
FIG. 19 illustrates an example of mapping mesh patches constituting a simplified mesh mapped onto a 2D image according to embodiments;
FIG. 20 illustrates another example of a reconstructed texture map video according to embodiments;
FIG. 21 is a flowchart illustrating an example mesh data transmission method according to embodiments; and
FIG. 22 is a flowchart illustrating an example mesh data reception method according to embodiments.

### [Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

With recent advancements in 3D data modeling and rendering technologies, research on generating and processing 3D data has been actively conducted across various fields, including virtual reality (VR), augmented reality (AR), autonomous driving, computer-aided design (CAD)/computer-aided manufacturing (CAM), and geographic information systems (GIS). 3D data may be represented as a point cloud or a mesh depending on the representation format. A mesh is composed of geometry information indicating the coordinates of each vertex or point, connectivity information indicating connections between vertices, a texture map representing color information about the mesh surface as 2D image data, and texture coordinates indicating the mapping information between the surface of the mesh and the texture map. In the present disclosure, a mesh is defined as a dynamic mesh when at least one of the elements constituting the mesh changes over time, and is defined as a static mesh when it does not change.

Dynamic mesh data involves significantly larger amounts of data of elements to represent the mesh compared to 2D image data. As a result, techniques for efficiently compressing a large amount of mesh data have been developed to store and transmit the data.

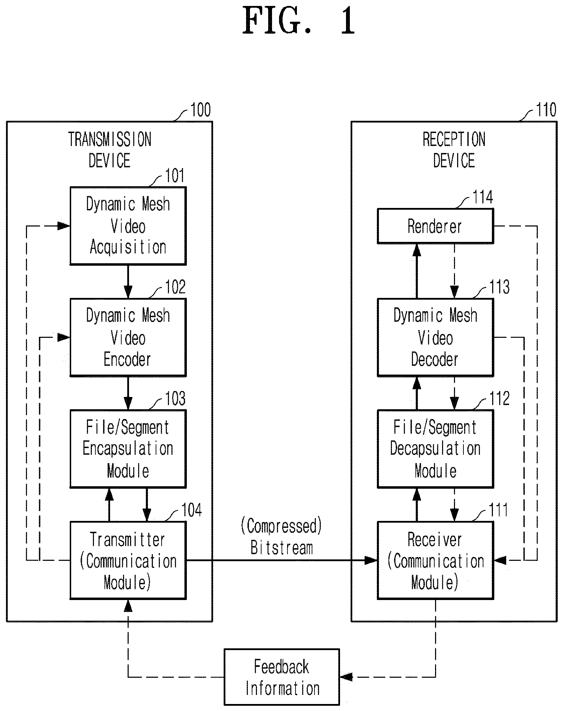

FIG. 1 illustrates a system for providing dynamic mesh content according to embodiments.

The system in FIG. 1 includes a transmission apparatus 100 and a reception apparatus 110. The transmission apparatus 100 may include a mesh video acquisition unit 101, a mesh video encoder 102, a file/segment encapsulator 103, and a transmitter 104. The reception apparatus 110 may include a receiver 111, a file/segment decapsulator 112, a mesh video decoder 113, and a renderer 114. Each component in FIG. 1 may correspond to hardware, software, a processor, and/or a combination thereof. In the following description, a mesh data transmission apparatus according to embodiments may be interpreted as referring to a 3D data transmission apparatus or transmission apparatus 100, or as referring to a mesh video encoder (hereinafter, encoder) 102. A mesh data reception apparatus according to embodiments may be interpreted as referring to a 3D data reception apparatus or reception apparatus 110, or as referring to a mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique for point cloud data. Point cloud data is data that has color information in the coordinates (X, Y, Z) of vertices (or points). In the present disclosure, vertex coordinates (i.e., position information) are referred to as geometry information, color information about vertices is referred to as attribute information. The geometry information and attribute information are together referred to as vertex information or point cloud data. Mesh data refers to vertex information including inter-vertex connectivity information. Content may be originally created in the form of mesh data. Alternatively, connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a video. The generated mesh video may be transmitted through a series of operations, and the receiving side may process the received data back into a mesh video for rendering. Through this process, the mesh video may be provided to the user, allowing the user to utilize the mesh content interactively according to their intent.

As shown in FIG. 1, a mesh compression system may include a transmission apparatus 100 and a reception apparatus 110. The transmission apparatus 100 may encode the mesh video to output a bitstream, which may be delivered to the reception apparatus 110 over a digital storage medium or a network in the form of file or streaming (streaming segments). The digital storage medium may include various storage media such as USB, SD, CD, DVD, Blu-ray, HDD, and SSD.

In the transmission apparatus 100, the encoder may be referred to as a mesh video/image/picture/frame encoding device. In the reception apparatus 110, the decoder may be referred to as a mesh video/image/picture/frame decoding device. A transmitter may be included in the mesh video encoder, and a receiver may be included in the mesh video decoder. The renderer 114 may include a display, and the renderer and/or display may be configured as separate devices or external components. The transmission apparatus 100 and reception apparatus 110 may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinate related to mesh vertices, referred to as UV coordinates or texture coordinates, related to related to the vertices of the mesh. A mesh contains a 2D attribute map, which may be used to store high-resolution attribute information such as texture, normal, and displacement. Here, the displacement may be used interchangeably with displacement information or a displacement vector.

The mesh video acquisition unit 101 may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder 102 may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/frames/pictures. The mesh video encoder 102 may perform a Video-based Dynamic Mesh (V-Mesh) compression procedure. For compression and coding efficiency, the mesh video encoder 102 may perform a series of procedures such as prediction, transformation, quantization, and entropy coding. Encoded data (encoded video/image information) may be output in the form of a bitstream.

The file/segment encapsulation module 103 may encapsulate encoded mesh video data and/or mesh video-related metadata in the form of a file or the like. The mesh video-related metadata may be received from a metadata processor. The metadata processing unit may be included in the mesh video encoder 102, or may be configured as a separate component/module. The file/segment encapsulation module 103 may encapsulate the data into a file format such as ISOBMFF or process the same into forms such as DASH segments. According to embodiments, the file/segment encapsulator 103 may include the mesh video-related metadata in the file format. For example, the mesh video metadata may be included in boxes at various levels in the ISOBMFF file format, or as data on separate tracks in the file. In some embodiments, the file/segment encapsulator 103 may encapsulate the mesh video-related metadata into a file.

The transmission processor may apply processing to the encapsulated mesh video data for transmission based on the file format. The transmission processor may be included in the transmitter 104 or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter 104 may transmit the encoded video/image information or data output in bitstream form to the receiver 111 of the reception apparatus 110 over a digital storage medium or network in the form of a file or streaming. The digital storage medium may include various storage media such as USB, SD, CD, DVD, Blu-ray, HDD, and SSD. The transmitter 104 may include an element to generate a media file through a predetermined file format, and may include an element for transmission over a broadcast/communication network. The receiver 111 may extract the bitstream and deliver the same to a decoding device.

The receiver 111 may receive the mesh video data transmitted by the mesh data transmission apparatus. Depending on the channel for transmission, the receiver 111 may receive the mesh video data over a broadcast network or a broadband network, or may receive the mesh video data over a digital storage medium.

The reception processor may perform processing on the received mesh video data according to the transmission protocol. The reception processor may be included in the receiver 111, or may be configured as a separate component/module. To correspond to the processing performed for transmission on the transmitting side, the reception processor may perform the reverse process to the operations of the transmission processor described above. The reception processor may deliver the acquired mesh video data to the file/segment decapsulator 112 and the acquired mesh video-related metadata to the metadata parser. The mesh video-related metadata acquired by the reception processor may be in the form of a signaling table.

The file/segment decapsulator 112 may decapsulate mesh video data in the form of files received from the reception processor. The file/segment decapsulator 112 may decapsulate the files according to ISOBMFF or the like to acquire a mesh video bitstream or mesh video-related metadata (metadata bitstream). The acquired mesh video bitstream may be delivered to the mesh video decoder 113, and the acquired mesh video-related metadata (metadata bitstream) may be delivered to the metadata processor. The mesh video bitstream may include metadata (metadata bitstream). The metadata processor may be included in the mesh video decoder 113, or may be configured as a separate component/module. The mesh video-related metadata acquired by the file/segment decapsulator 112 may be in the form of boxes or tracks in the file format. The file/segment decapsulator 112 may receive metadata required for decapsulation from the metadata processor, when necessary. The mesh video-related metadata may be delivered to the mesh video decoder 113 for use in the mesh video decoding procedure, or to the renderer 114 for use in the mesh video rendering procedure.

The mesh video decoder 113 may receive the input bitstream and perform the reverse operation corresponding to the operation of the mesh video encoder 102 to decode the video/images. The decoded mesh video/images may be displayed through the display of the renderer 114. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to embodiments of dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an MxN block may include a set (or array) of samples (or a sample array) or transform coefficients composed of M columns and N rows.

As described above, the encoding process of FIG. 1 is performed as follows.

In other words, the compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video. The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

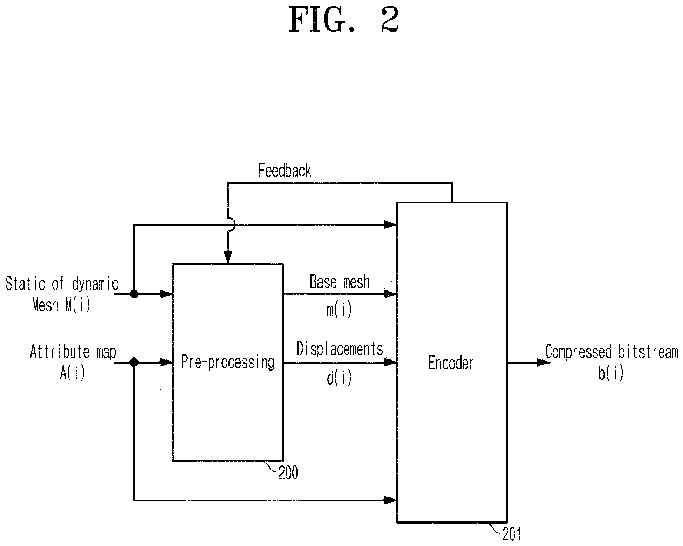

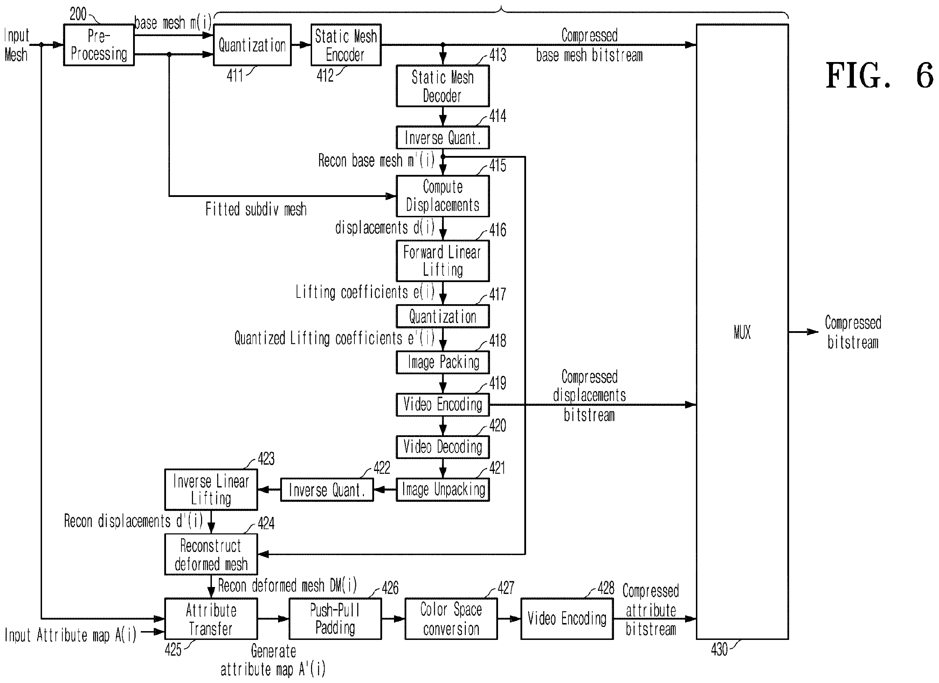

A method of encoding mesh position information (or vertex position information) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The mesh video encoder 102 of FIG. 1 may include a pre-processor 200 and an encoder 201, as shown in FIG. 2. Also, the transmission apparatus of FIG. 1 may be broadly referred to as an encoder, and the mesh video encoder 102 of FIG. 1 may be referred to as an encoder. The V-Mesh compression method may include pre-processing 200 and encoding 201, as shown in FIG. 2. The pre-processor 200 of FIG. 2 may be positioned at the front end of the encoder 201 of FIG. 2. The pre-processor 200 and encoder 201 of FIG. 2 may be referred to as a single encoder.

The pre-processor 200 may receive a static of dynamic mesh (M(i)) and/or an attribute map (A(i)). The pre-processor 200 may generate a base mesh m(i) and/or displacements d(i) through pre-processing. The pre-processor 200 may receive feedback information from the encoder 201, and may generate the base mesh and/or displacements based on the feedback information.

The encoder 201 may receive the base mesh m(i), the displacements d(i), the static of dynamic mesh M(i), and/or the attribute map A(i). In the present disclosure, at least one of the base mesh m(i), the displacements d(i), the static of dynamic mesh M(i), and/or the attribute map A(i) may be referred to herein as mesh-related data. The encoder 201 may encode the mesh-related data to generate a compressed bitstream.

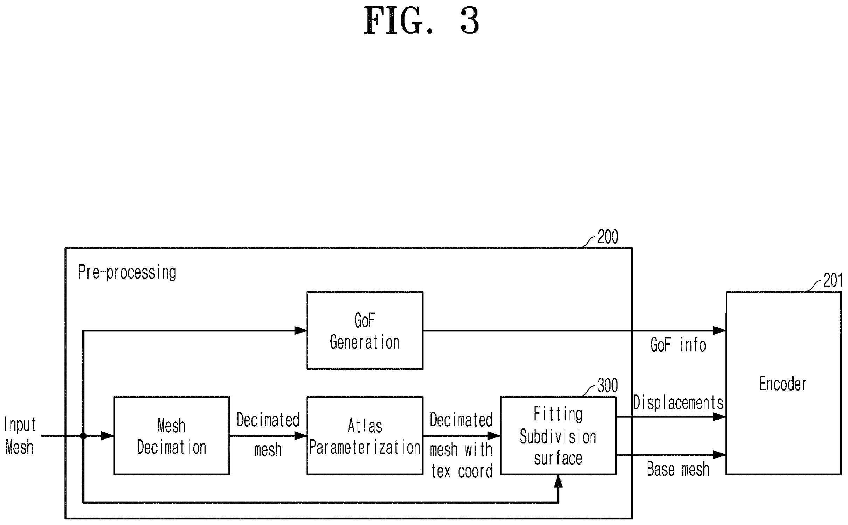

FIG. 3 illustrates pre-processing in V-MESH compression according to embodiments.

FIG. 3 illustrates the configuration and operation of the pre-processor of FIG. 2. In FIG. 3, the input mesh may include a static of dynamic mesh M(i) and/or attribute map A(i). The input mesh may also include 3D coordinates of vertices constituting the mesh, normal information about each vertex, mapping information for mapping the mesh surface to a 2D plane, and connectivity information between the vertices constituting the surface.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface (300). According to embodiments, the GoF generation may be referred to as a GoF generation process or a GoF generator, the mesh decimation may be referred to as a mesh simplification process or the mesh decimation part, the UV parameterization may be referred to as a UV parameterization process or the UV parameterization part, and the fitting subdivision surface may be referred to as a fitting subdivision surface process or a fitting subdivision surface part. The pre-processor 200 may generate displacements and/or a base mesh from the received input mesh, and deliver the same to the encoder 201. The pre-processor 200 may deliver GoF information related to the GoF generation to the encoder 201.

Hereinafter, each operation of FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, the encoder 201 may perform inter frame encoding. Otherwise, it performs intra frame encoding for the frame.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UVAtlas tool. This process generates mapping information indicating where each vertex of the decimated mesh may be mapped to on the 2D image. The mapping information is expressed and stored as texture coordinates, and the final base mesh is generated through this process.

Fitting subdivision surface (300): A process of performing subdivision on the decimated mesh (i.e., a decimated mesh with texture coordinates). The displacements and base mesh generated by this process are output to the encoder 201. A user-defined method, such as the mid-edge method, may be applied as the subdivision method. A fitting process is performed such that the input mesh and the subdivided mesh become similar to each other. The mesh on which the fitting process is performed will be referred to herein as the fitted subdivided mesh.

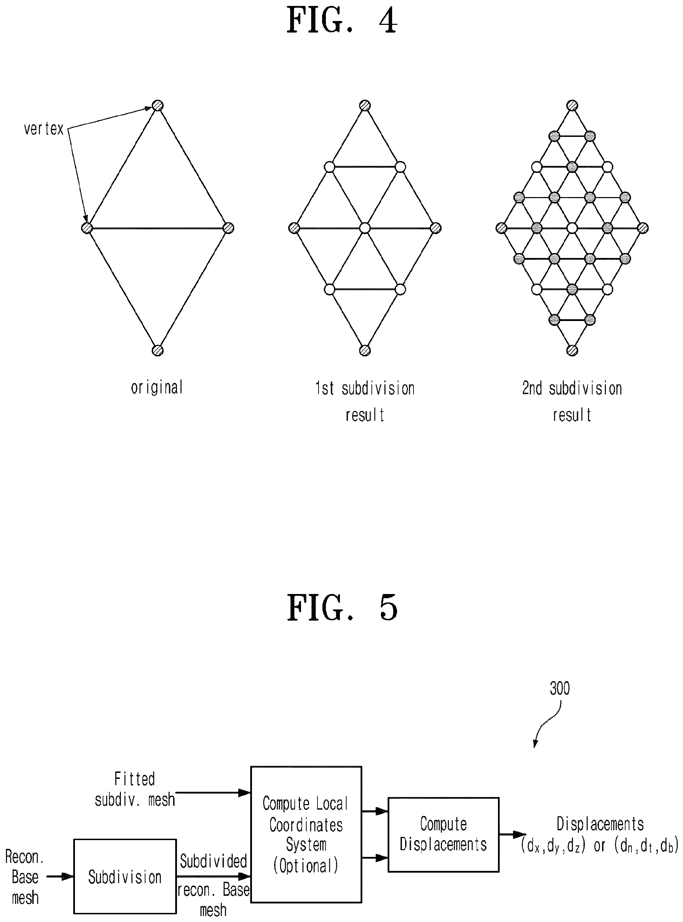

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices. Then, the fitting process is performed to make the input mesh and the sub-mesh similar to each other, resulting in a fitted subdivided mesh.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

FIG. 5 illustrates a displacement generation process according to embodiments. The displacement generation process of FIG. 5 may be performed by the pre-processor 200, or may be performed by the encoder 201.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may perform a subdivision on the reconstructed base mesh to generate a subdivided reconstructed base mesh. Here, the reconstruction of the base mesh may be performed by the pre-processor 200, or may be performed by the encoder 201. The local coordinate system calculator may receive the fitted subdivided mesh and the subdivided reconstructed base mesh, and may transform the coordinate system related to the mesh to a local coordinate system based on the received meshes. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The mesh data transmission method and apparatus according to embodiments may encode the mesh data as follows. Mesh data is a term that includes point cloud data. Point cloud data (which may be referred to as a point cloud for short) according to embodiments may refer to data including vertex coordinates (also referred to as geometry information) and color information (also referred to as attribute information). In addition, a geometry image, an attribute image, an occupancy map, and auxiliary information (also referred to as patch information) generated through patch generation and packing based on vertex coordinates and color information may also be referred to as point cloud data. Therefore, point cloud data including connectivity information may be referred to as mesh data. The terms point cloud and mesh data may be used interchangeably herein.

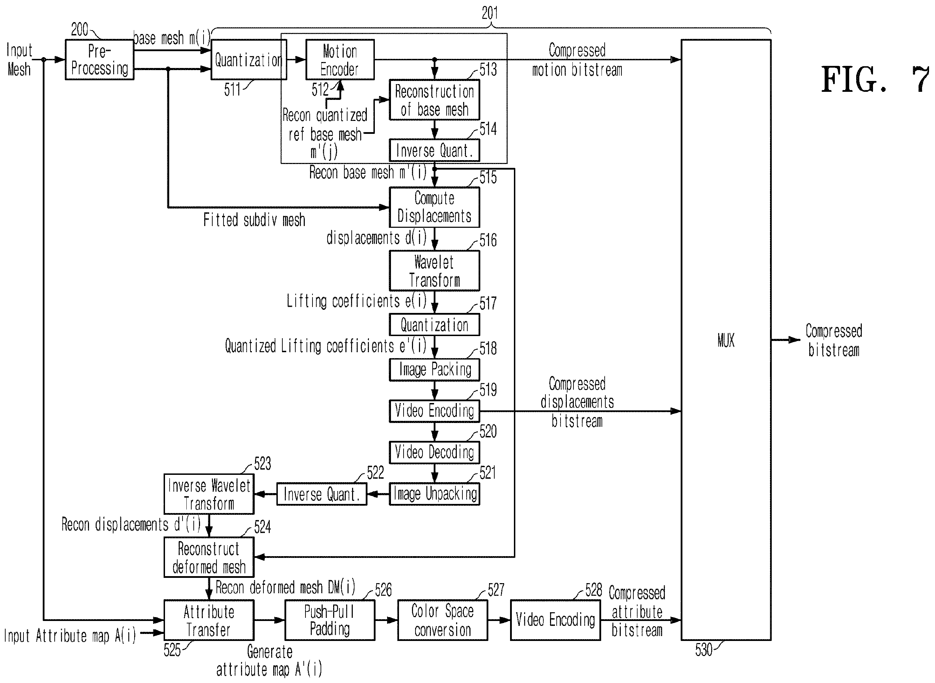

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments. Each component for the intra-frame encoding process of FIG. 6 corresponds to hardware, software, a processor, and/or a combination thereof.

The encoding process of FIG. 6 details the encoding of the mesh video encoder 102 of FIG. 1. That is, it represents the configuration of the mesh video encoder 102 when the encoding of FIG. 1 is intra-frame encoding. The encoder of FIG. 6 may include a pre-processor 200 and/or an encoder 201. The pre-processor 200 and encoder 201 of FIG. 6 may correspond to the pre-processor 200 and encoder 201 of FIG. 3.

The pre-processor 200 may receive an input mesh and perform the pre-processing described above. A base mesh and/or a fitted subdivided mesh may be generated through the pre-processing.

The quantizer 411 of the encoder 201 may quantize the base mesh and/or the fitted subdivided mesh. The static mesh encoder 412 may encode the static mesh (i.e., the quantized base mesh) and generate a bitstream containing the encoded base mesh (i.e., a compressed base mesh bitstream). The static mesh decoder 413 may decode the encoded static mesh (i.e., the encoded base mesh). The inverse quantizer 414 may inversely quantize the quantized static mesh (i.e., base mesh) and output a reconstructed (restored) base mesh. The displacement calculator 415 may generate a displacement or displacements based on the reconstructed static mesh (i.e., base mesh) and the fitted subdivided mesh. According to embodiments, the displacement calculator 415 subdivides the reconstructed base mesh and then calculates a displacement, which is the difference in position of each vertex between the subdivided base mesh and the fitted subdivided mesh. In other words, the displacement is a displacement vector that is the difference in position between the vertices in the two meshes when the fitted subdivided mesh is similar to the original mesh. The forward linear lifter 416 may perform a lifting transform on the input displacements to generate lifting coefficients (also referred to as a transform coefficient). The quantizer 417 may quantize the lifting coefficients. The image packer 418 may pack the image based on the quantized lifting coefficients. The video encoder 419 may encode the packed image. That is, the quantized lifting coefficients are packed into a frame as a 2D image by the image packer 418, compressed by the video encoder 419, and output as a displacement bitstream (i.e., a compressed displacement bitstream).

The video decoder 420 decodes the compressed displacement bitstream. The image unpacker 421 may perform unpacking on the decoded displacement frame to output quantized lifting coefficients. The inverse quantizer 422 may inversely quantize the quantized lifting coefficients. The inverse linear lifting unit 423 applies inverse lifting to the inversely quantized lifting coefficients to generate reconstructed displacements. The mesh reconstructor 424 restores the reconstructed and deformed mesh based on the reconstructed displacements output from the inverse linear lifting unit 423 and the reconstructed base mesh (also referred to as the subdivided reconstructed base mesh) output from the inverse quantizer 414. The reconstructed and deformed mesh is referred to herein as the reconstructed deformed mesh.

The attribute transfer 425 receives an input mesh and/or an input attribute map and regenerates an attribute map based on the reconstructed deformed mesh. The attribute map refers to a texture map corresponding to attribute information among the mesh data components. In the present disclosure, the terms attribute map and texture map may be used interchangeably. The push-pull padding unit 426 may pad data to the attribute map based on a push-pull method. The color space converter 427 may convert the space of the color components of the attribute map. For example, the attribute map may be converted from an RGB color space to a YUV color space. The video encoder 428 may encode the attribute map to output a compressed attribute bitstream.

The multiplexer 430 may multiplex the compressed base mesh bitstream, the compressed displacement bitstream, and the compressed attribute bitstream to generate a compressed bitstream.

In FIG. 6, the displacement calculator 415 may be included in the pre-processor 200. Additionally, at least one of the quantizer 411, the static mesh encoder 412, the static mesh decoder 413, or the inverse quantizer 414 may be included in the pre-processor 200.

As described in FIG. 6, the intra frame encoding method includes base mesh encoding (also referred to as static mesh encoding). That is, when intra frame encoding is performed on the current input mesh frame, the base mesh generated during the pre-processing of the pre-processor 200 may be quantized by the quantizer 411 and then encoded by the static mesh encoder 412 using a static mesh compression technique. In the V-Mesh compression method, for example, the Draco technique is applied to encode the base mesh, and the vertex position information, mapping information (texture coordinates), vertex connectivity information, and the like related to the base mesh are subject to compression.

The encoder in FIG. 6 compresses the base mesh, displacements, and attributes in a frame to generate a bitstream, while the encoder in FIG. 7 compresses the motion, displacements, and attributes between the current frame and a reference frame to generate a bitstream.

FIG. 7 illustrates an inter-frame encoding process in a V-MESH compression method according to embodiments. Each component for the inter-frame encoding process of FIG. 7 corresponds to hardware, software, a processor, and/or a combination thereof.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201. The pre-processor 200 and encoder 201 of FIG. 7 may correspond to the pre-processor 200 and encoder 201 of FIG. 3.

For the components of the encoding operation of FIG. 7 that correspond to the encoding operation of FIG. 6, refers to the description of FIG. 6. That is, the operations of the quantizer 511, displacement calculator 515, wavelet transformer 516, quantizer 517, image packer 518, video encoder 519, video decoder 520, image unpacker 521, inverse quantizer 522, and inverse wavelet transformer 523, mesh reconstructor 524, attribute transfer 525, push-pull padding 526, color space converter 527, video encoder 528, and multiplexer 530 in FIG. 7 are the same as or similar to the operations of the quantizer 411, static mesh encoder 412, static mesh decoder 413, and inverse quantizer 414, displacement calculator 415, forward linear lifting unit 416, quantizer 417, image packer 418, video encoder 419, video decoder 420, image unpacker 421, inverse quantizer 422, inverse linear lifting unit 423, and mesh reconstructor 424, attribute transfer 425, push-pull padding 426, color space converter 427, video encoder 428, and multiplexer 430 in FIG. 6 described above, and are therefore not described in detail in relation to FIG. 7 to avoid redundancy.

In FIG. 7, for inter-frame-based encoding, the motion encoder 512 may obtain and encode a motion vector between the reconstructed quantized reference base mesh and the quantized current base mesh, and output a compressed motion bitstream. The motion encoder 512 may be referred to as a motion vector encoder. The base mesh reconstructor 513 may reconstruct a base mesh based on the reconstructed quantized reference base mesh and the encoded motion vectors. The reconstructed base mesh is inversely quantized by the inverse quantizer 514 and output to the displacement calculator 515.

In FIG. 7, the displacement calculator 515 may be included in the pre-processor 200. Additionally, at least one of the quantizer 511, motion encoder 512, base mesh reconstructor 513, or inverse quantizer 514 may be included in the pre-processor 200.

As described with reference to FIG. 7, the inter-frame encoding method may include motion field encoding (also referred to as motion vector encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field (or motion vector) may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of the residual motion field may be encoded using entropy coding. Except for the motion field encoding in the inter frame encoding, the process of encoding the displacements and attribute map is the same as the structure of the intra frame encoding method except for the base mesh encoding.

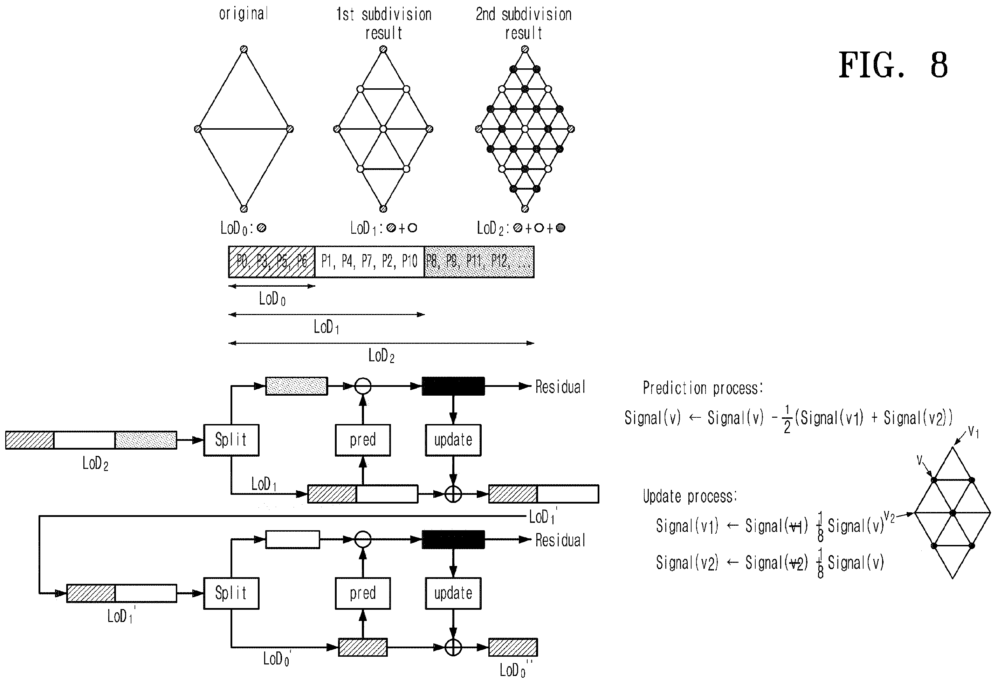

FIG. 8 illustrates a lifting transform process for displacements according to embodiments.

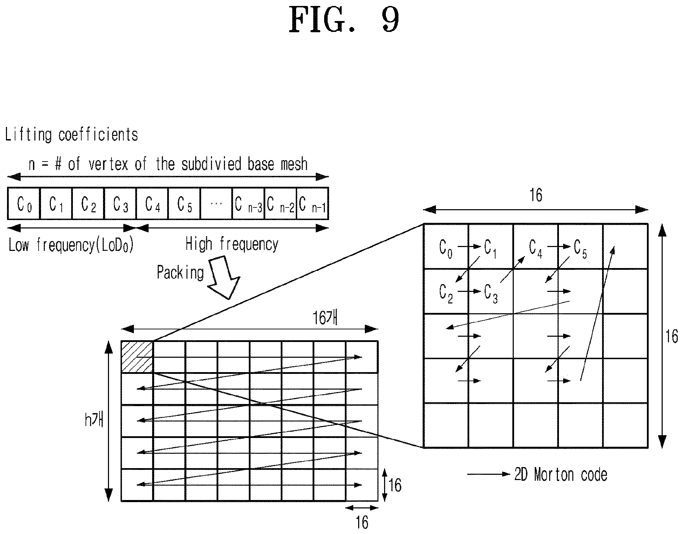

FIG. 9 illustrates a process of packing transform coefficients (also referred to as lifting coefficients) into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface (see 415 in FIG. 6 or 515 in FIG. 7). A data transform process, such as a wavelet transform, may be applied to the displacement information for effective encoding (see 416 in FIG. 6, or 516 in FIG. 7).

FIG. 8 illustrates the process of transforming displacement information by the forward linear lifting unit 416 of FIG. 6 or the wavelet transformer 516 of FIG. 7 using the lifting transform. For example, a linear wavelet-based lifting transform may be performed. The transform coefficients generated through the transform process are quantized by the quantizer 417 (or 517) and then packed into a 2D image by the image packer 418 (or 518), as shown in FIG. 9. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded by the video encoder 419 (or 519) using a conventional video compression codec.

Referring to FIG. 8, the base mesh (original) may include vertices and edges for LoD0. A first subdivision mesh generated by splitting (or subdividing) the base mesh includes vertices generated by further splitting (or subdividing) the edges of the base mesh. The first subdivision mesh contains vertices for LoD0 and vertices for LoD1. LoD1 includes subdivided vertices and vertices from the base mesh (LoD0). The first subdivision mesh may be split (or subdivided) to generate a second subdivision mesh. The second subdivision mesh contains LoD2. LoD2 includes a base mesh vertex (LoD0), LoD1 containing vertices further split (or subdivided) from LoD0, and LoD2 containing vertices further split (or subdivided) from LoD1. LoD is a level of detail that indicates how detailed the mesh data content is. As the index of the level increases, the distance between vertices is shortened, and the level of detail rises. In other words, as the value of LoD decreases, the detail of the mesh data content is degraded. As the value of LoD increases, the detail of the mesh data content is enhanced. LoD N contains the vertices contained in LoD N-1. In the case where the mesh (or vertex) is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated through the residual. In the present disclosure, vertex and point may be used interchangeably. The LoDs may be defined in the subdivision of the base mesh. According to embodiments, the subdivision of the base mesh may be performed by the pre-processor 200 or may be performed by a separate component/module.

Referring to FIG. 9, a vertex has a transform coefficient (also referred to as a lifting coefficient) generated through lifting transform. The transform coefficient of the vertex related to the lifting transform may be packed into an image by the image packer 418 (or 518) and then encoded by the video encoder 419 (or 519).

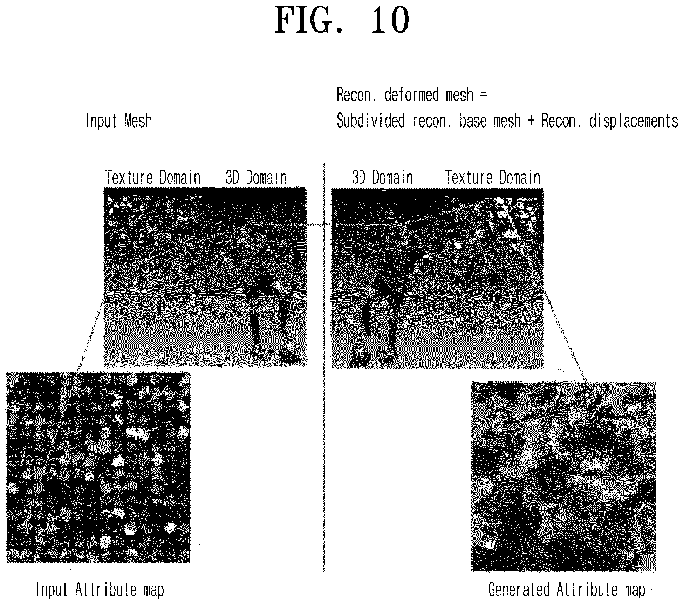

FIG. 10 illustrates an attribute transfer process in a V-MESH compression method according to embodiments.

According to embodiments, FIG. 10 illustrates a detailed operation of the attribute transfer 425 (or 525) in the encoding of FIGS. 6, 7, etc.

The encoding according to the embodiments includes attribute map encoding. According to embodiments, the attribute map encoding may be performed by the video encoder 428 of FIG. 6 or the video encoder 528 of FIG. 7.

According to embodiments, in the present disclosure, the encoder compresses information about the input mesh through base mesh encoding (i.e., intra-encoding), motion field encoding (i.e., inter-encoding), and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is re-generated through the attribute transfer process of the attribute transfer 425 (or 525).

According to embodiments, the attribute transfer 425 (or 525) first checks, for every point P(u, v) in the 2D texture domain, whether the corresponding vertex is within a texture triangle of the Recon. deformed mesh. When the corresponding vertex is in the texture triangle T, the attribute transfer calculates the barycentric coordinates (α, β, γ) of P(u, v) according to the triangle T. Then, it calculates the 3D coordinates M(x, y, z) of P(u, v) based on the 3D vertex positions of the triangle T and (α, β, γ). The vertex coordinates M'(x', y', z') that corresponds to the closest position to the calculated M(x, y, z) and a triangle T' containing this vertex are searched for in the input mesh domain. Then, the barycentric coordinates (α', β', γ') of M'(x', y', z') in the triangle T' are calculated. The texture coordinates (u', v') are calculated based on the texture coordinates corresponding to the three vertices of triangle T' and (α', β', γ'), and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm of the push-pull padding 426 (or 526).

The new attribute map generated by the attribute transfer 425 (or 525) is bundled into GoFs to construct an attribute map video, which is compressed using a video codec of the video encoder 428 (or 528).

A reference relationship between the input mesh, the input attribute map, the reconstructed deformed mesh, and the reconstructed attribute map is shown may be seen from FIG. 10.

The decoding process of FIG. 1 may perform the reverse of the encoding process of FIG. 1. Specifically, the decoding process is performed as disclosed below.

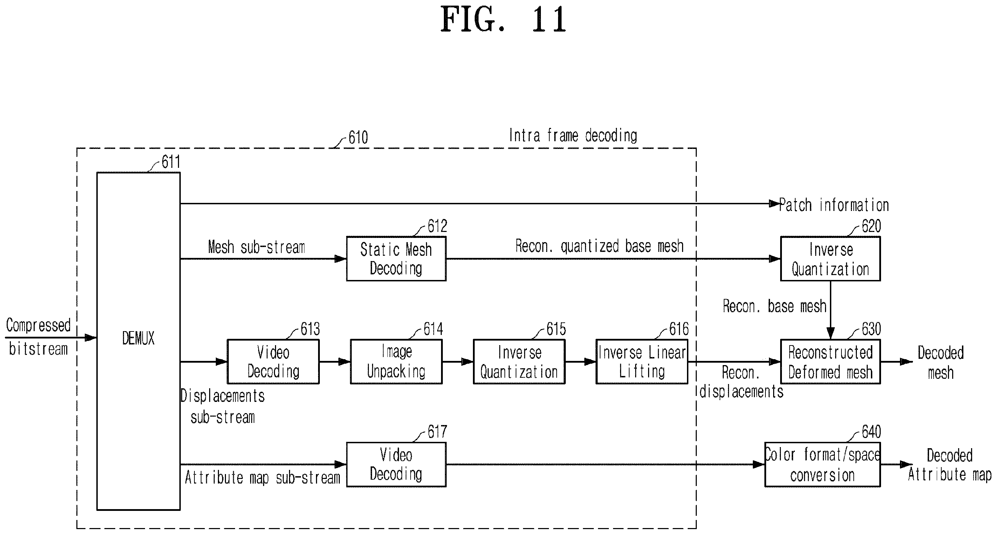

FIG. 11 shows the intra-frame decoding (or intra decoding) process of the V-Mesh technology according to embodiments.

FIG. 11 illustrates the configuration and operation of the mesh video decoder 113 of the reception apparatus of FIG. 1. Additionally, FIG. 11 illustrates that the mesh data may be reconstructed by performing a reverse process to the intra-frame encoding process of FIG. 6. Each component for the intra-frame decoding process of FIG. 11 corresponds to hardware, software, and/or a combination thereof.

First, the bitstream (i.e., compressed bitstream) received and input to the demultiplexer 611 of the intra-frame decoder 610 may be separated into a mesh sub-stream, a displacement sub-stream, an attribute map sub-stream, and a sub-stream containing patch information about the mesh, such as V-PCC/V3C. The term V-PCC (Video-based Point Cloud Compression) used in the present disclosure may have the same meaning as V3C (Visual Volumetric Video-based Coding). The two terms may be used interchangeably. Accordingly, in the present disclosure, the term V-PCC may be interpreted as V3C.

According to embodiments, the mesh sub-stream may be input to and decoded by a static mesh decoder 612, the displacement sub-stream may be input to and decoded by the video decoder 613, and the attribute map sub-stream may be input to and decoded by the video decoder 617.

According to embodiments, the mesh sub-stream may be decoded through the decoder 612 of a static mesh codec used in the encoding such as, for example, Google Draco, to reconstruct connectivity information, vertex geometry information, vertex texture coordinates, and the like related to the result of the decoding, a recon. quantized base mesh, e.g., reconstructed base mesh.

According to embodiments, the displacement sub-stream may be decoded into a displacement video through the decoder 613 of the video compression codec used in the encoding. Then, image unpacking is performed by the image unpacker 614, inverse quantization is performed by the inverse quantizer 615, and inverse transform is performed by the inverse linear lifting unit 616 to reconstruct the displacement information about each vertex (i.e., Recon. displacements).

According to embodiments, the base mesh reconstructed by the static mesh decoder 612 is inversely quantized by the inverse quantizer 620 and output to the mesh reconstructor 630. The mesh reconstructor 630 reconstructs a reconstructed deformed mesh (i.e., a decoded mesh) based on the reconstructed displacements output from the inverse linear lifting unit 616 and the reconstructed base mesh output from the inverse quantizer 620. In other words, the inversely quantized reconstructed base mesh is combined with the reconstructed displacement information to generate a final decoded mesh. In the present disclosure, the final decoded mesh is referred to as a reconstructed deformed mesh.

According to embodiments, the attribute map sub-stream is decoded by the decoder 617 corresponding to the video compression codec used in the encoding, and then a final attribute map (i.e., a decoded attribute map) is reconstructed by the color transformer 640 through color format transform, color space conversion, and the like.

According to embodiments, the reconstructed decoded mesh and decoded attribute map may be utilized at the receiving side as final mesh data that may be utilized by a user.

Referring to FIG. 11, the received compressed bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

As described above, the decoder of FIG. 11 performs intra-frame decoding as follows. The static mesh decoder 612 decodes the mesh sub-stream to generate a reconstructed quantized base mesh, and the inverse quantizer 620 applies the quantization parameters of the quantizer in reverse to generate a reconstructed base mesh. The video decoder 613 decodes the displacement sub-stream, the image unpacker 614 unpacks the image of the decoded displacement video, and the inverse quantizer 615 inversely quantizes the quantized image. The inverse linear lifting unit 616 applies a lifting transform in the reverse process of the encoder to generate a reconstructed displacement. The mesh reconstructor 630 generates a reconstructed deformed mesh based on the reconstructed base mesh and the reconstructed displacement. The video decoder 617 decodes the attribute map sub-stream, and the color transformer 640 transforms the color format and/or space of the decoded attribute map to generate a decoded attribute map.

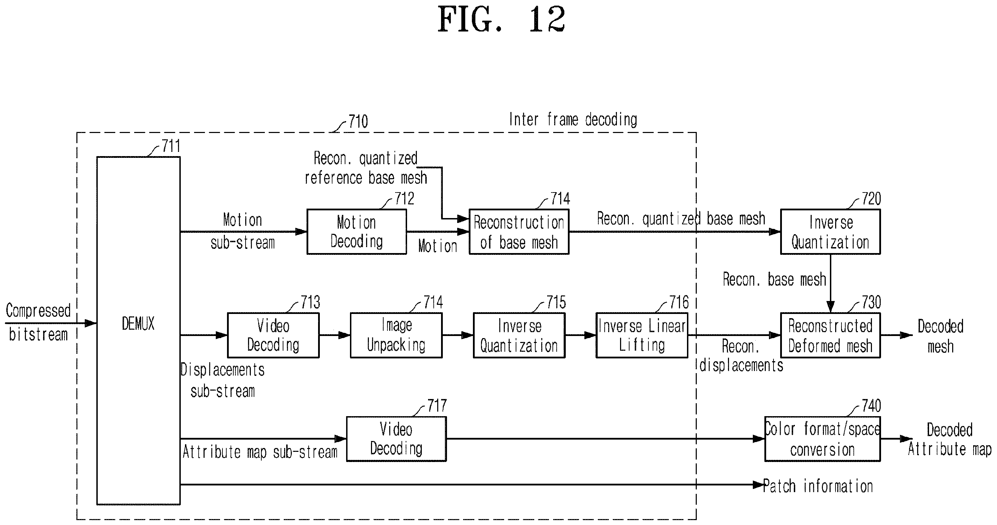

FIG. 12 illustrates an inter-frame decoding (or inter-decoding) process of V-Mesh technology.

FIG. 12 illustrates the configuration and operation of the mesh video decoder 113 of the reception apparatus of FIG. 1. In FIG. 12, mesh data may be reconstructed by performing a reverse process to the inter-frame encoding process of FIG. 7. Each component for the intra-frame decoding process of FIG. 12 corresponds to hardware, software, and/or a combination thereof.

First, the bitstream received and input to the demultiplexer 711 of the intra-frame decoder 710 may be separated into a motion sub-stream (also referred to as a motion vector sub-stream), a displacement sub-stream, an attribute map sub-stream, and a sub-stream containing patch information about the mesh, such as V3C/V-PCC.

According to embodiments, the motion sub-stream may be input to and decoded by the motion decoder 712, the displacement sub-stream may be input to and decoded by the video decoder 713, and the attribute map sub-stream may be input to and decoded by the video decoder 717.

According to embodiments, the motion sub-stream is decoded by the motion decoder 712 through entropy decoding and inverse prediction to reconstruct motion information (also referred to as motion vector information). The base mesh reconstructor 718 combines the reconstructed motion information with a pre-reconstructed and stored reference base mesh to generate a reconstructed quantized base mesh for the current frame. The inverse quantizer 720 applies inverse quantization to the reconstructed quantized base mesh to generate a reconstructed base mesh. The video decoder 713 decodes the displacement sub-stream, the image unpacker 714 unpacks the image of the decoded displacement video, and the inverse quantizer 715 inversely quantizes the quantized image. The inverse linear lifting unit 716 applies a lifting transform in the reverse process of the encoder to generate a reconstructed displacement. The mesh reconstructor 730 generates a reconstructed deformed mesh, i.e., a final decoded mesh, based on the reconstructed base mesh and the reconstructed displacement.

According to embodiments, the video decoder 717 decodes the attribute map sub-stream in the same way as the intra-decoding, and the color transformer 740 transforms the color format and/or space of the decoded attribute map to generate a decoded attribute map. The decoded mesh and decoded attribute map may be utilized at the receiving side as the final mesh data that may be utilized by the user.

Referring to FIG. 12, the bitstream contains motion information (also referred to as motion vectors), displacements, and an attribute map. The process of FIG. 12 further includes decoding the inter-frame motion information because inter-frame decoding is performed. A reconstructed base mesh is generated by decoding the motion information and generating a reconstructed quantized base mesh for the motion information based on the reference base mesh. For the operations in FIG. 12 that are the same as those in FIG. 11, refer to the description of FIG. 11.

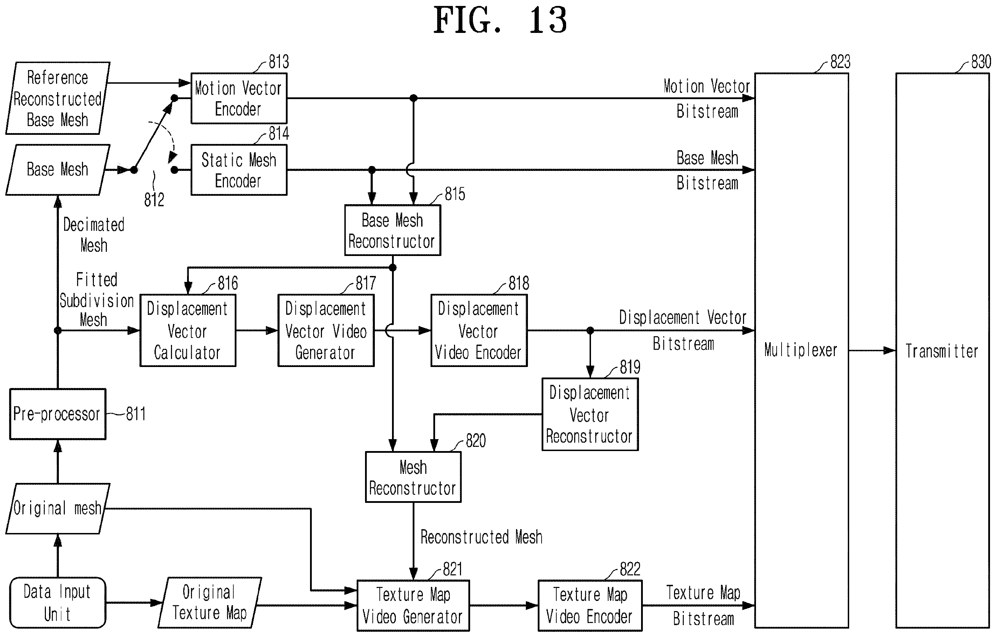

FIG. 13 illustrates a mesh data transmission apparatus according to embodiments.

FIG. 13 corresponds to the transmission apparatus 100 or mesh video encoder 102 of FIG. 1, the encoder (pre-processor and encoder) of FIG. 2, 6, or 7, and/or the corresponding transmission encoding device. Each component of FIG. 13 corresponds to hardware, software, a processor, and/or a combination thereof.

The process of operations at the transmitting end for compressing and transmitting dynamic mesh data using a V-Mesh compression technique may be configured as shown in FIG. 13. The transmission apparatus of FIG. 13 may perform intra-frame encoding (also referred to as intra-encoding or intra-picture encoding) and/or inter-frame encoding (also referred to as inter-encoding or inter-picture encoding).

The pre-processor 811 receives the original mesh and generates a decimated mesh (or base mesh) and a fitted subdivided (or subdivision) mesh. The decimation may be performed based on a target number of vertices or a target number of polygons constituting the mesh. Parameterization may be performed on the decimated mesh to generate texture coordinates and texture connectivity information per vertex. For example, the parameterization is a process of mapping a 3D curved surface into a texture domain for the decimated mesh. When the parameterization is performed using the UVAtlas tool, mapping information indicating where each vertex of the decimated mesh may be mapped to on the 2D image is generated. The mapping information is expressed and stored as texture coordinates, and the final base mesh is generated through this process. The mesh information may be quantized from a floating-point form to a fixed-point form. The result is the base mesh, which may be output to a motion vector encoder 813 or a static mesh encoder 814 through a switching unit 812. The pre-processor 811 may perform a mesh subdivision on the base mesh to generate additional vertices. Depending on the subdivision method, vertex connectivity information including the additional vertices, texture coordinates, and connectivity information about the texture coordinates may be generated. The pre-processor 811 may generate a fitted subdivided mesh by adjusting vertex positions such that the subdivided mesh becomes similar to the original mesh.

According to embodiments, when inter-frame encoding (inter-encoding) is performed on the mesh frame, the base mesh is output to the motion vector encoder 813 through the switching unit 812. When intra-frame encoding (intra-encoding) is performed on the mesh frame, the base mesh is output to the static mesh encoder 814 through the switching unit 812. The motion vector encoder 813 may be referred to as a motion encoder.

For example, when intra-encoding (intra-frame encoding) is performed on the mesh frame, the base mesh may be compressed through the static mesh encoder 814. In this case, the connectivity information, vertex geometry information, vertex texture information, normal information, and the like related to the base mesh may be encoded. The base mesh bitstream generated through the encoding is transmitted to the multiplexer 823.

As another example, when inter-encoding (inter-frame encoding) is performed on the mesh frame, the motion vector encoder 813 may receive as input a base mesh and a reference reconstructed base mesh (or a reconstructed quantized reference base mesh), compute a motion vector between the two meshes, and encode the value thereof. Further, the motion vector encoder 813 may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer 823.

The base mesh reconstructor 815 may receive the base mesh encoded by the static mesh encoder 814 or the motion vector encoded by the motion vector encoder 813, and generate a reconstructed base mesh. For example, the base mesh reconstructor 815 may perform static mesh decoding on the base mesh encoded by the static mesh encoder 814 to reconstruct the base mesh. In this case, quantization may be applied before the static mesh decoding, and inverse quantization may be applied after the static mesh decoding. In another example, the base mesh reconstructor 815 may reconstruct the base mesh based on the reconstructed quantized reference base mesh and the motion vector encoded by the motion vector encoder 813. The reconstructed base mesh is output to the displacement calculator (or displacement vector calculator) 816 and the mesh reconstructor 820.

The displacement calculator 816 may perform mesh subdivision on the reconstructed base mesh. The displacement calculator 816 may calculate a displacement vector, which is the value of the difference in vertex positions between the subdivided reconstructed base mesh and the fitted subdivision (or subdivided) mesh generated by the pre-processor 811. In this case, displacement vectors as many as vertices in the subdivided mesh may be calculated. The displacement calculator 816 may transform the displacement vectors calculated in the 3D Cartesian coordinate system to a local coordinate system based on the normal vector of each vertex.

The displacement vector video generator 817 may include a linear lifting part, a quantizer, and an image packer. That is, in displacement vector video generator 817, the linear lifting unit may transform the displacement vectors for effective encoding. According to embodiments, the transform may be lifting transform, wavelet transform, or the like. In addition, the quantizer may perform quantization on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image by the image packer. The displacement vector video generator 817 may generate a displacement vector video by grouping the packed 2D images for each frame. A displacement vector video may be generated for each group of frames (GoF) of the input mesh.

The displacement vector video encoder 818 may encode the generated displacement vector video using a video compression codec. The generated displacement vector video bitstream is transmitted to the multiplexer 823.

The displacement vector reconstructor 819 may include a video decoder, an image unpacker, an inverse quantizer, and an inverse linear lifting part. That is, in the displacement vector reconstructor 819, the encoded displacement vector is decoded by the video decoder, image unpacking is performed by the image unpacker, inverse quantization is performed by the inverse quantizer, and inverse transform is performed by the inverse linear lifting unit to reconstruct displacement vectors. The reconstructed displacement vectors are output to the mesh reconstructor 820. The mesh reconstructor 820 reconstructs a deformed mesh based on the base mesh reconstructed by the base mesh reconstructor 815 and the displacement vectors reconstructed by the displacement vector reconstructor 819. The reconstructed mesh (also referred to as the reconstructed deformed mesh) has reconstructed vertices, inter-vertex connectivity information, texture coordinates, and inter-texture coordinate connectivity information.

The texture map video generator 821 may re-generate a texture map based on the texture map (or attribute map) of the original mesh and the reconstructed deformed mesh output from the mesh reconstructor 820. According to embodiments, the texture map video generator 821 may assign the vertex-by-vertex color information in the texture map of the original mesh to the texture coordinates of the reconstructed deformed mesh. According to embodiments, the texture map video generator 821 may generate a texture map video by grouping the frame-level re-generated texture maps into GoFs.

The generated texture map video may be encoded by the texture map video encoder 822 using a video compression codec. A texture map video bitstream generated through the encoding is transmitted to the multiplexer 823.

The multiplexer 823 multiplexes the motion vector bitstream (in the case of, for example, inter-encoding), the base mesh bitstream (in the case of, for example, intra-encoding), the displacement vector bitstream, and the texture map bitstream into a single bitstream. The single bitstream may be transmitted to the receiving side through the transmitter 824. Alternatively, for the motion vector bitstream, the base mesh bitstream, the displacement vector bitstream, and the texture map bitstream, a file with one or more track data may be generated or the bitstreams may be encapsulated into segments and transmitted to the receiving side through the transmitter 824.

Referring to FIG. 13, the transmitter (encoder) may encode the mesh in an intra-frame or inter-frame manner. According to intra-encoding, the transmission apparatus may generate a base mesh, displacement vectors (or displacements), and a texture map (or attribute map). According to inter-encoding, the transmission apparatus may generate a motion vector (or motion), displacement vectors (or displacements), and a texture map (or attribute map). The texture map acquired from the data input unit is generated and encoded based on the reconstructed mesh. The displacements are generated and encoded based on the differences in vertex positions between the base mesh and the segmented (or subdivided) mesh. More specifically, the displacement is a difference in position between the fitted subdivided mesh and the subdivided reconstructed base mesh, i.e., the difference in vertex position between the two meshes. The base mesh is generated by decimating the original mesh through pre-processing and encoding the decimated mesh. For the motion, a motion vector is generated for the mesh in the current frame based on the reference base mesh in the previous frame.

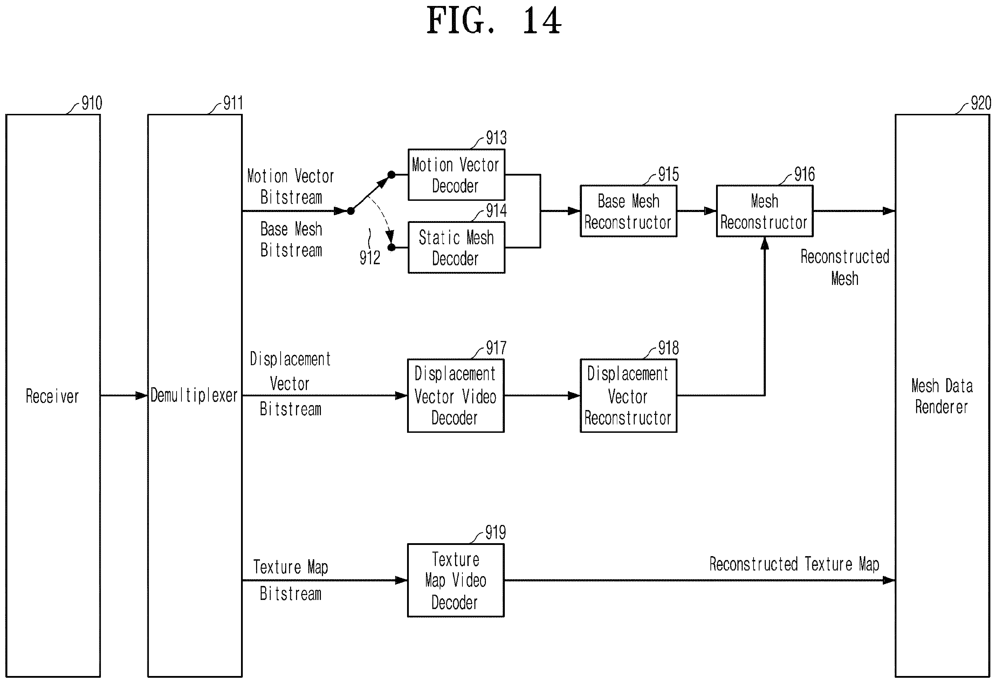

FIG. 14 illustrates a mesh data reception apparatus according to embodiments.

FIG. 14 corresponds to the reception apparatus 110 or mesh video decoder 113 of FIG. 1, the decoder of FIG. 11 or 12, and/or a corresponding receiving decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of mesh data received by the receiver 910 is subjected to file/segment decapsulation and then demultiplexed by the demultiplexer 911 into a compressed motion vector bitstream (e.g., inter-decoding) or base mesh bitstream (e.g., intra-decoding), a displacement vector bitstream, and a texture map bitstream. For example, when the current mesh is inter-frame encoded (i.e., inter-encoded), the motion vector bitstream is received, demultiplexed, and then output to the motion vector decoder 913 through the switching unit 912. In another example, when the current mesh is intra-frame encoded (i.e., intra-encoded), the base mesh bitstream is received, demultiplexed, and output to the static mesh decoder 914 through the switching unit 912. Here, the motion vector decoder 913 may be referred to as a motion decoder.

According to embodiments, in the case where inter-frame encoding is applied to the current mesh based on the frame header information, the motion vector decoder 913 may decode the motion vector bitstream. According to embodiments, the motion vector decoder 913 may use the previously decoded motion vector as a predictor and add the same to the residual motion vector decoded from the bitstream to reconstruct the final motion vector.

According to embodiments, in the case where intra-frame encoding is applied to the current mesh based on the frame header information, the static mesh decoder 914 may decode the base mesh bitstream to reconstruct connectivity information, vertex geometry information, texture coordinates, normal information, and the like related to the base mesh.

According to embodiments, the base mesh reconstructor 915 may reconstruct the current base mesh based on the decoded motion vectors or the decoded base mesh. For example, in the case where inter-frame encoding is applied to the current mesh, the base mesh reconstructor 915 may add the decoded motion vectors to the reference base mesh and perform inverse quantization to generate a reconstructed base mesh. In another example, in the case where intra-frame encoding is applied to the current mesh, the base mesh reconstructor 915 may perform inverse quantization on the base mesh decoded by the static mesh decoder 914 to generate a reconstructed base mesh.

According to embodiments, the displacement vector video decoder 917 may decode the displacement vector bitstream as a video bitstream using a video codec.

According to embodiments, the displacement vector reconstructor 918 extracts displacement vector transform coefficients from the decoded displacement vector video, and applies inverse quantization and inverse transform to the extracted displacement vector transform coefficients to reconstruct displacement vectors. To this end, the displacement vector reconstructor 918 may include an image unpacker, an inverse quantizer, and an inverse linear lifting part. If the reconstructed displacement vectors are values in a local coordinate system, inverse transform to the Cartesian coordinate system may be performed.

The mesh reconstructor 916 may subdivide the reconstructed base mesh to generate additional vertices. Through the subdivision, vertex connectivity information including the additional vertices, texture coordinates, and connectivity information about the texture coordinates may be generated. In this case, the mesh reconstructor 916 may combine the subdivided reconstructed base mesh with the reconstructed displacement vectors to generate a final reconstructed mesh (also referred to as a reconstructed deformed mesh).

According to embodiments, the texture map video decoder 919 may decode the texture map bitstream as a video bitstream using a video codec to reconstruct a texture map. The reconstructed texture map has color information about each vertex in the reconstructed mesh, and the texture coordinates of each vertex may be used to obtain the color value of the vertex from the texture map.

According to embodiments, the mesh reconstructed from the mesh reconstructor 916 and the texture map reconstructed from the texture map video decoder 919 are presented to the user through a rendering process in the mesh data renderer 920.

Referring to FIG. 14, the reception apparatus (decoder) may decode the mesh in an intra-frame or inter-frame manner. According to intra-decoding, the reception apparatus may receive a base mesh, displacement vectors (or displacements), and a texture map (or attribute map), and render mesh data based on the reconstructed mesh and reconstructed texture map. According to inter-decoding, the reception apparatus may receive a motion vector (or motion), the displacement vectors (or displacements), a texture map (or attribute map), and render mesh data based on the reconstructed mesh and the reconstructed texture map.

A mesh data transmission apparatus and method according to embodiments may pre-process the mesh data, encode the pre-processed mesh data, and transmit a bitstream containing the encoded mesh data. A point mesh data reception apparatus and method according to embodiments may receive a bitstream containing mesh data and decode the mesh data. The mesh data transmission/reception methods/apparatuses according to embodiments may be abbreviated as a method/devices according to embodiments. The mesh data transmission/reception methods/apparatuses according to embodiments may also be referred to as the 3D data transmission/reception methods/apparatuses according to embodiments.

As described above, the transmission apparatus first performs pre-processing on an input original mesh as shown in FIG. 6, 7, or 13. More specifically, as shown in FIG. 3, the mesh decimation unit of the pre-processor 200 generates a decimated mesh for the input original mesh, and the atlas parameterization (also referred to as, UV parameterization) unit generates texture coordinates for the vertices constituting the decimated mesh. The decimated mesh and texture coordinates are then compressed and reconstructed as the base mesh data for the input original mesh.

At this time, the attribute transfer 425 of FIG. 6, the attribute transfer 525 of FIG. 7, or the texture map video generator 821 of FIG. 13 re-generates a new texture map based on the texture map of the original mesh and the texture coordinates that the reconstructed mesh has after encoding. Here, the texture coordinates that the reconstructed mesh has the result of subdivision performed on the reconstructed base mesh, and have values calculated based on the texture coordinates generated by the pre-processor 200. The texture map images re-generated based on the texture coordinates of the reconstructed mesh are processed as video and compressed by an existing video codec (e.g., the video encoder 428 of FIG. 6, video encoder 528 of FIG. 7, or texture map video encoder 822 of FIG. 13). In this way, the texture coordinates generated by the pre-processor 200 will affect the structure/shape of the reconstructed texture map images, which in turn will affect the performance of the texture map video compression.

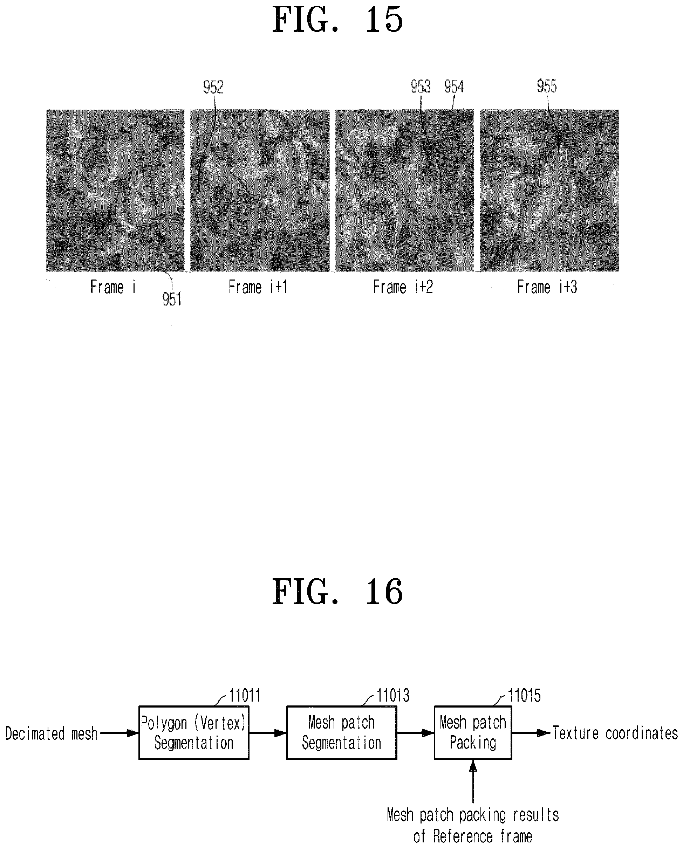

FIG. 15 shows an example of a texture map video re-generated according to the V-Mesh method described above. Specifically, when generating texture coordinates for a decimated mesh in the atlas parameterization of the pre-processor 200, the texture coordinates for each vertex are generated based on only information about the current frame. Then, when the base mesh with the generated texture coordinates is compressed and reconstructed and used for texture map re-generation, the texture maps re-generated by the attribute transfer (see 425 in FIG. 6 or 525 in FIG. 7) or the texture map video generator 821 of FIG. 13 have low image correlation between frames, as shown in FIG. 15. For example, in FIG. 15, the mesh patch of the face may be positioned near the lower right corner in frame i (951), near the center left in frame i+1 (952), split into two parts near the center right in frame i+2 (953, 954), and near the upper right corner in frame i+3 (955). As such, in the parameterization operation, the texture maps re-generated based on the texture coordinates of the decimated mesh generated based on only the current frame information and the original texture maps have low image correlation between frames and little temporal consistency.

In particular, when compressing the texture map video using a video codec as shown in FIG. 7 or 13, i.e., when applying inter-frame encoding to compress the texture map video, a large amount of residual signal data to be encoded may be generated due to low accuracy of the inter-frame prediction, and thus many compressed bitstreams may be generated . In addition, a larger encoded bitstream size of the input mesh may require more resources and costs for system operations such as data transmission and storage.

In other words, in the V-Mesh compression method described so far, the input dynamic mesh data is decimated, and the decimated mesh data is encoded using the static mesh compression method. The decimated mesh data includes geometry information about the vertices constituting the mesh, and texture coordinate information for retrieving the color information about each vertex from the texture map. V-Mesh processes the texture coordinates of the original mesh to generate texture coordinates for the decimated mesh. Then, the generated texture coordinates are processed to be more efficient for compressing the texture map video compared to the texture coordinates of the original mesh. However, since they do not reflect the temporal coherence of the video, there are limitations in achieving sufficient performance and efficiency when applying the inter-frame compression method for compression. In particular, as the input mesh content and the texture map resolution therefor increase, and the target bitrate increases, the resolution and capacity of the compressed texture map video increases. Accordingly, there may e limitations in compressing, transmitting, and utilizing mesh content using the method described above.

Therefore, in order to improve the compression performance of texture map video using a video codec, a method to generate new texture coordinates is proposed such that temporal consistency may be reflected as much as possible in the reconstructed texture map video stream. In other words, by using the method proposed herein when the transmission apparatus encodes a texture map video, the compression performance of texture map video may be improved. Thereby, the performance of compression of a dynamic mesh may be improved. Further, in storing, utilizing, and transmitting the bitstream generated after compressing the mesh data acquired using the encoder applied in the present disclosure, and storing and utilizing the bitstream at the receiving side, fewer resources may be used. In other words, by re-generating and compressing a texture map (i.e., an attribute map) based on the method proposed in the present disclosure, the cost required for using mesh content in media and communication systems, etc. may be reduced and the scope of applications utilizing mesh content may be further expanded.

In other words, since the bitstream of a texture map video accounts for a large proportion of the mesh bitstream compressed by V-Mesh, using the methods proposed in the present disclosure to improve the compression performance for texture map videos may improve the compression performance of V-Mesh.

FIG. 16 is an example detailed block diagram of a parameterization unit according to embodiments.

According to embodiments, the parameterization unit is included in the pre-processor 200 of FIG. 2, 3, 6, 7, or 13. That is, the parameterization unit of FIG. 16 is positioned between the mesh decimation unit and the fitting subdivision surface unit in the pre-processor 200.

The parameterization unit of FIG. 16 may include a polygon/vertex segmentation unit 11011, a mesh patch segmentation unit 11013, and a mesh patch packing unit 11015. Each of the components for parameterization in FIG. 16 may correspond to hardware, software, a processor, and/or a combination thereof.

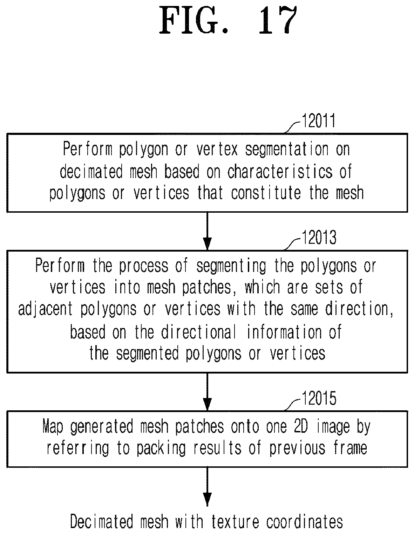

FIG. 17 is a flowchart illustrating an example parameterization method according to embodiments. In one embodiment, operation 12011 of FIG. 17 is performed by the polygon/vertex segmentation unit 11011 of FIG. 16, and operation 12013 is performed by the mesh patch segmentation unit 11013 of FIG. 16. Also, operation 12015 is performed by the mesh patch packing unit 11015 of FIG. 16.

The parameterization process for generating texture coordinates for the decimated mesh will be described with reference to FIGS. 16 and 17.

First, the decimated mesh from the mesh decimation unit of the pre-processor 200 is input to the polygon/vertex segmentation unit 11011 of the parameterization part.

According to embodiments, the polygon/vertex segmentation unit 11011 performs polygon or vertex segmentation on the decimated mesh based on characteristics of the polygons (triangle or rectangle shapes) or vertices that constitute the mesh (operation 12011). The segmentation in operation 12011 includes determining which of the directions in which the planes of the bounding box enclosing the mesh object is the most similar to the orientation of the polygon formed by the connection of the vertices constituting the mesh or the orientation of each vertex. In this case, the orientation may be determined by the normal vector of the polygon or the normal vector of the vertex. That is, the normal vector of the mesh polygon or the normal vector of the vertex is compared with the normal vectors of the six planes of the bounding box to determine the similarity, and the orientation of the plane with the most similar normal vector is determined for the polygon or vertex. According to embodiments, the normal vector of the polygon may be calculated using the position coordinates of the vertices constituting the polygon. According to embodiments, regarding the normal vector of a vertex, when the input mesh data contains vertex-specific normal information, the values of the information may be used. When the data does not contain the normal information, the values may be calculated based on the vertex and its neighbors. To this end, the polygon/vertex segmentation unit 11011 may apply the method of calculating a normal for each point in generating a patch for a point cloud in the V-PCC. The orientation of the polygon or vertex may be the orientation of one of the six planes of the bounding box, or may be one of the orientations including, if any, additional orientations defined by the user.

According to embodiments, based on the direction (or orientation) information of the polygons or vertices obtained from the polygon/vertex segmentation unit 11011, the mesh patch segmentation unit 11013 performs the process of segmenting the segmented polygons or vertices into mesh patches, which are sets of adjacent (or neighboring) polygons with the same direction (operation 12013). In operation 12013, when the mesh patch segmentation is performed on a polygon basis, polygons oriented in the same direction and adjacent to each other based on the current polygon are computed, and the maximum number of adjacent polygons, that is, the maximum number of polygons that may constitute the mesh patch, may be defined by the user. When the mesh patch segmentation is performed on a polygon basis in operation 12013, the mesh patch segmentation unit 11013 may perform the mesh patch segmentation on all polygons, and then include any polygons that are not included in a patch, either in a patch in the most dominant orientation among the orientations of the neighboring polygon patches, or in a polygon patch in the most similar orientation. When the mesh patch segmentation is performed based on vertices in operation 12013, the mesh patch segmentation unit 11013 may apply the method of partitioning the point cloud into patches in generating patches for the point cloud in the V-PCC.

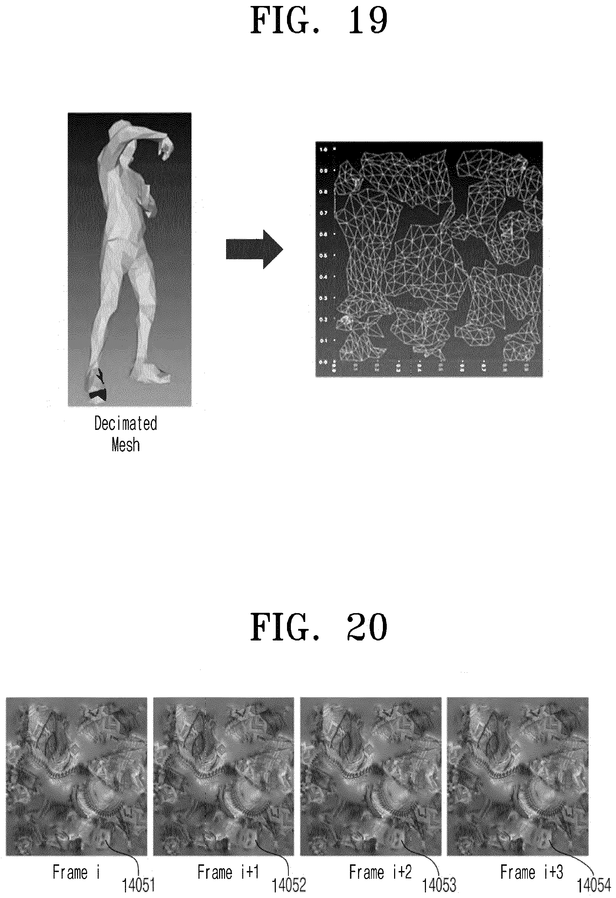

According to embodiments, the mesh patch packing unit 11015 maps the mesh patches generated by the mesh patch segmentation unit 11013 onto a single 2D image, as shown in FIG. 19. According to embodiments, the mesh patch packing may be performed by the mesh patch packing unit 11015 by applying a point cloud patch packing method of V-PCC.

According to embodiments, the mesh patch packing unit 11015 may output a decimated mesh with texture coordinates by referring to the packing results of the previous frame when mapping the generated mesh patches onto one 2D image (operation 12015). That is, the mesh patch patching unit 11015 maps the generated mesh patches onto the 2D image by referring to the results of packing of the previous frame to generate mapping information for identifying where each vertex of the decimated mesh maps to on the 2D image. This mapping information is expressed as texture coordinates to be stored.

In other words, the mesh patch packing unit 11015 may perform mesh patch packing by mapping the generated mesh patches onto the 2D image in descending order of patch size. According to embodiments, to ensure that each mesh patch is mapped onto the 2D image of a user-specified size, the mesh patch packing unit 11015 may search for the positions in raster scan order, starting from the coordinates (0, 0) of the image. Further, the mesh patches may be rotated by a user-specified angle and mapped onto the 2D image (i.e., 2D frame). According to embodiments, a new patch is not allowed to be mapped to a position that has already been mapped to and filled with a previous patch in the 2D image (i.e., 2D frame).

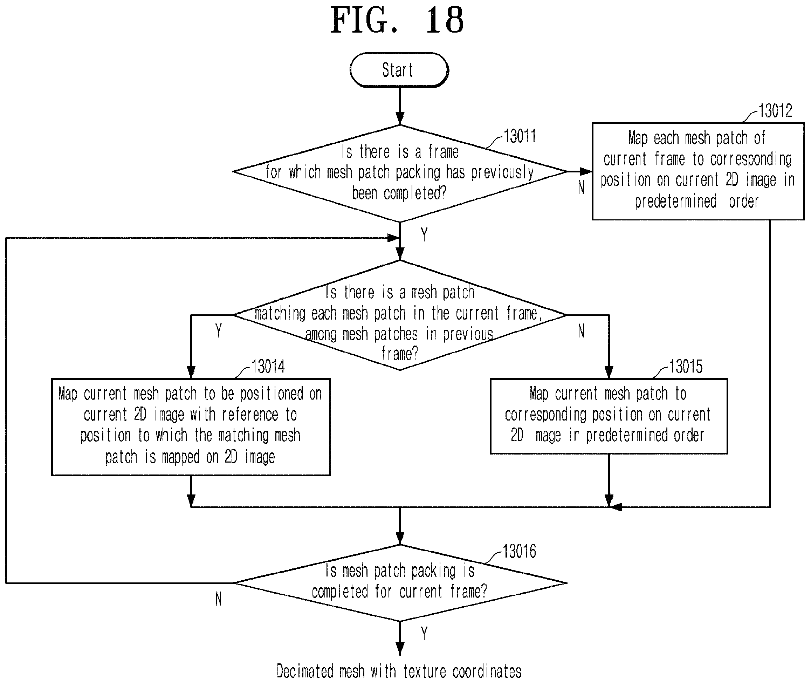

FIG. 18 is a detailed flowchart illustrating an example mesh patch packing method used in the parameterization operation according to embodiments. That is, FIG. 18 is a flowchart illustrating an example method of mapping mesh patches with reference to the packing results from the previous frame when the mesh patch packing unit 11015 performs packing of mapping mesh patches onto a single 2D image.

That is, to consider similarities between frames in mapping mesh patches onto a single 2D image, the mesh patch packing unit 11015 may pack the mesh patches with reference to the packing results from the previous frame to generate texture coordinates.

First, it is checked whether there is a frame for which mesh patch packing has previously been completed (operation 13011).

When it is determined in operation 13011 that there is no frame for which mesh patch packing has previously been completed, mesh patch packing may be performed by mapping the generated mesh patches onto the 2D image in descending order of size of the generated mesh patches as described above (operation 13012). According to embodiments, to ensure that each mesh patch is mapped onto the 2D image of a user-specified size, the positions may be searched for in raster scan order, starting from the coordinates (0, 0) of the image. Further, the mesh patches may be rotated by a user-specified angle and mapped onto the 2D image (i.e., 2D frame). In this case, a new patch is not allowed to be mapped to a position that has already been mapped to and filled with a previous patch in the 2D image (i.e., 2D frame).

When it is determined in operation 13011 that there is a frame for which mesh patch packing has previously been completed, it is determined, for each mesh patch in the current frame, whether there is a matching mesh patch among the mesh patches in the previous frame (operation 13013). The criteria for matching in operation 13013 may include the orientation of the mesh patch and positional similarity of the polygons/vertices constituting the mesh patch. According to embodiments, in operation 13013, when the orientations of the mesh patches are the same, the number of polygons/vertices constituting the mesh patches is similar, and their positions in 3D space or 2D space are similar, it may be determined that the two mesh patches match each other. For example, when at least one of the mesh patches in the previous frame is in the same orientation as the current mesh patch in the current frame, and has a similar number of polygons/vertices, and similar positions thereof in 3D space or 2D space, it may be determined that the two mesh patches (i.e., at least one of the mesh patches of the previous frame and the current mesh patch of the current frame) match each other.

When it is determined in operation 13013 that there is no matching mesh patch in the previous frame for the current mesh patch in the current frame, the current mesh patches are mapped to corresponding positions on the current 2D image in a predetermined order, as described above (operation 13015).

When it is determined in operation 13013 that there is a matching mesh patch in the previous frame for the current mesh patch, the current mesh patch may be mapped to be positioned on the current 2D image with reference to the position to which the matching mesh patch in the previous frame is mapped on the 2D image (operation 13014). For example, the current mesh patch may be mapped onto the current 2D image to have the same position as the matching mesh patch in the previous frame. In the case where the same position on the current 2D image is occupied by another mesh patch, the current mesh patch may be mapped to the closest position to the occupied position. In some embodiments, mesh patches in the current frame for which matching mesh patches have been found in the previous frame may first be mapped onto the current 2D image, and then unmatched mesh patches may be mapped to appropriate positions in the remaining space of the 2D image. Through this process, the mesh patches in the current frame may be mapped to positions similar to those of the mesh patches in the previous frame.

Once mesh patch packing is completed for the current frame by repeating the above-described process (operation 13016), the mesh patches constituting the decimated mesh may be positioned on the 2D image to which they are mapped, as a result, as shown on the right side of FIG. 19. Then, the mapped positions of the vertices constituting each mesh patch on the 2D image may be obtained. The mapped positions of the vertices on the 2D image have 2D coordinate values. In the present disclosure, these coordinate values are used as the texture coordinates of the vertices. The texture coordinates are included as texture coordinates for each vertex in the decimated mesh and compressed as information that constitutes the base mesh. That is, the decimated mesh with the texture coordinates is input to the fitting subdivision surface part, by which the subdivision (i.e., segmentation) and fitting process is performed. Then, the fitted subdivided mesh and base mesh are output to the encoder 201. Reference is made herein to the description of FIG. 3 for details of the operation of the fitting subdivision surface part, which are omitted herein to avoid redundancy.

FIG. 19 illustrates an example of mapping mesh patches constituting a simplified mesh mapped onto a 2D image according to embodiments.

According to embodiments, the encoder 201 calculates displacement information (or displacements or displacement vectors) based on the base mesh and fitted subdivided mesh output by the pre-processor 200, and generates a reconstructed deformed mesh based on the calculated displacement information. For example, the reconstructed deformed mesh is acquired by adding the reconstructed displacements to the subdivided (or subdivision) reconstructed base mesh. Reference is made herein to the description of FIG. 6, 7, or 13 for details of generating the reconstructed deformed mesh, which are omitted herein to avoid redundancy.

According to embodiments, the attribute transfer 425 of FIG. 6, the attribute transfer 525 of FIG. 7, or the texture map video generator 821 of FIG. 13 re-generates a texture map (or attribute map) based on the texture map of the original mesh and the reconstructed deformed mesh, as described above.

That is, the process described with reference to FIGS. 16 to 18 is performed such that the texture coordinates output by the parameterization unit of the pre-processor 200 for the basis of determining where to store the color information about each vertex in the 2D texture map when re-generating the texture map for the reconstructed mesh in the attribute transfer stage.

As described above, the present disclosure ensures that similar mesh patches from different frames are packed in similar positions on the 2D image through the process described above. Accordingly, similar mesh patches may have similar texture coordinates. As a result, the texture map re-generated based on the texture coordinates may have a similar shape across frames. Thus, the final generated texture map video may maintain temporal consistency as much as possible, as shown in FIG. 20, and may result in high compression performance when inter-frame prediction is applied to compress the texture map video.

FIG. 20 illustrates another example of a reconstructed texture map video according to embodiments. That is, FIG. 20 illustrates an example of the result of mapping the mesh patches of the current frame onto a single 2D image with reference to the result of packing of the previous frame.

That is, when generating texture coordinates for the decimated mesh in the atlas parameterization operation of the pre-processor 200, texture coordinates for each vertex are generated based on the result of packing of the previous frame and the information about the current frame. Then, the base mesh with the generated texture coordinates is compressed and reconstructed. When it is used for texture map re-generation, the texture maps re-generated by the attribute transfer (see 425 in FIG. 6 or 525 in FIG. 7) or the texture map video generator 821 of FIG. 13 have high image correlation between frames, as shown in FIG. 20. For example, in FIG. 16, the mesh patch of the face may be packed in approximately the same position (i.e., near the lower right corner of the frames) 14051 to 14054 in frame i, frame i+1, frame i+2, and frame i+3. As such, in the parameterization operation, the texture maps re-generated based on the texture coordinates of the decimated mesh generated based on the previous frame information and the current frame information and the original texture maps have high image correlation between frames and maintain temporal consistency.

The texture maps re-generated by the attribute transfer (see 425 in FIG. 6 or 525 in FIG. 7) or the texture map video generator 821 of FIG. 13 are encoded by the video encoder (see 428 in FIG. 6, 528 in FIG. 7, or 822 in FIG. 13) and output as a compressed attribute map bitstream. In the present disclosure, the attribute map bitstream is used interchangeably with a compressed texture map bitstream. The compressed attribute bitstream is then multiplexed with other bitstreams by a multiplexer. Then, it may be transmitted to the reception apparatus of FIG. 11, 12, or 14, or may be encapsulated in a file or segment and transmitted to the reception apparatus of FIG. 11, 12, or 14.

The reception apparatus of FIG. 11, 12, or 14 that processes the compressed bitstream or file/segment received from the transmission apparatus to reconstruct the mesh and attribute map has been described in detail above and will not be described below to avoid redundancy.

The 3D data transmission apparatus and method described so far may be summarized as follows.

1) For a decimated mesh, segmentation is performed by combining polygons or vertices having similar characteristics based on the characteristics of the polygons or vertices constituting the mesh.

2) The set of segmented polygons or vertices becomes a mesh patch, and the mesh patch packing process is performed to map the mesh patches generated from the input frame onto a 2D image.

3) The mesh patch packing method applies the method of packing the mesh patches of the current frame by referring to the packing results of the previous frame such that the inter-frame packing similarity may be considered

4) When the packing of all mesh patches onto the 2D image is completed, the mapped coordinate positions are used as the texture coordinates of each vertex constituting the patches.

5) The texture map re-generated based on the texture coordinates obtained above may have a similar shape across frames. The final texture map video generated based on the re-generated map may maintain temporal consistency as much as possible, thereby exhibiting high compression performance in video compression based on inter-frame prediction.

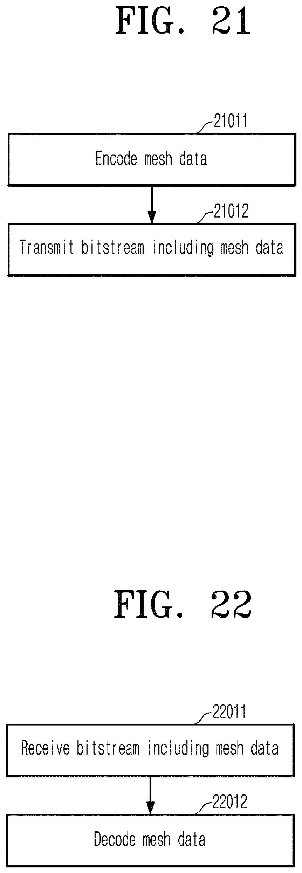

FIG. 21 is a flowchart illustrating an example transmission method according to embodiments. The transmission method according to the embodiments may include encoding mesh data (21011) and transmitting a bitstream containing the encoded mesh data (21012).

According to embodiments, the operation 21011 of encoding the mesh data may further include pre-processing the mesh data prior to encoding the mesh data. The pre-processing is performed by the pre-processor 200 of FIG. 3. FIG. 6, 7, or 13 illustrate example transmission apparatuses that include the pre-processor 200 of FIG. 3.

According to embodiments, the pre-processing may include operations of mesh decimation, parameterization, and fitting subdivision surface. The pre-processing may further include GoF generation. For details of each of these operations, refer to the description of FIG. 3 above.

According to embodiments, the parameterization may include polygon segmentation, mesh patch segmentation, and mesh patch packing. For details of each of these operations, refer to the descriptions of FIGS. 16 to 20 above.

That is, as described with reference to FIGS. 16 to 20, when the polygon segmentation, mesh patch segmentation, and mesh patch packing are performed, texture coordinates for the vertices of a decimated mesh are generated. The texture coordinates for the vertices of the decimated mesh are then included as base mesh data and encoded. The encoded base mesh is reconstructed by the base mesh reconstructor. The mesh reconstructor combines the reconstructed base mesh and the reconstructed displacement vectors to generate a reconstructed mesh. In other words, the reconstructed base mesh is subdivided by the base mesh reconstructor and combined with the displacement vectors, and the texture coordinates for the vertices that are additionally generated during the subdivision of the base mesh are calculated based on the texture coordinates of the reconstructed base mesh. As a result, the texture coordinates of the mesh reconstructed by the mesh reconstructor include the texture coordinates of the reconstructed base mesh and the texture coordinates of the subdivided vertices calculated based thereon.

The texture map video generator (or attribute transfer) processes the original texture map to re-generate a texture map for the reconstructed mesh. In this operation, a vertex in the original mesh that is most similar to each vertex in the reconstructed mesh is found, and the color information about the vertex is obtained from the original texture map and assigned to the 2D image of the texture map to be re-generated. The texture coordinates of the vertex in the reconstructed mesh are the position where the color information is assigned. In other words, a new texture map is re-generated based on the texture coordinates of the reconstructed mesh. The re-generated frame-specific texture maps are processed as video, and compressed and transmitted by a texture map video encoder. The texture map video generator (or attribute transfer) may be referred to as a texture map video generation stage or an attribute transfer stage.

The texture coordinates generated in the pre-processing operation reflect inter-frame similarity, and therefore the inter-frame similarity may be maintained in the texture map video re-generated by the texture map video generator (or attribute transfer), thereby further improving compression performance in encoding the texture map video according to the inter-frame encoding.

FIG. 22 is a flowchart illustrating an example reception method according to embodiments. The reception method according to the embodiments may include receiving a bitstream containing mesh data (22011) and decoding the mesh data contained in the bitstream (22012).

For details of the operation 22011 of receiving the bitstream containing the mesh data and the operation 22012 of decoding the mesh data contained in the bitstream, which will not be described herein to avoid redundancy, refer to the detailed description of the reception apparatus in FIG. 11, 12, or 14.

As such, according to the present disclosure, mesh patches may be mapped onto a 2D image with reference to the result of mesh patch packing in the previous frame, thereby reflecting the temporal consistency of the video. In other words, by segmenting the decimated mesh into mesh patches and mapping the patches onto a 2D image with reference to the result mesh patch packing in the previous frame, such that similar mesh patches may be mapped to similar positions. Thereby, the texture coordinates re-generated based on the mapped positions may maintain similarity between frames. As a result, the texture map images re-generated based on the texture coordinates may have a similar structure and shape across frames. Further, when the images are compressed using a video codec, inter-frame prediction may be effectively applied, resulting in improved compression performance.

Therefore, the performance of compression of texture map videos may be improved, which may in turn lead to improved compression performance of mesh content using V-Mesh. As mentioned above, the video bitstream is a very large part of the encoded mesh bitstream. Accordingly, by lowering the resource share required by the mesh system and reducing its cost of use, the mesh system may operate more efficiently, and the range of applications that utilize meshes may be expanded. In particular, the mesh patch packing method that reflects the result of mesh patch packing in the previous frame is more valuable when the user creates and produces mesh content and transfers the for utilization. For example, a system/platform/service such as an AR/hologram-based video conferencing system that uses 3D objects reflecting the user's appearance for real-time communication may be an example. Thus, the present disclosure may enhance the usability of V-Mesh.

As described above, according to the present disclosure, by taking into account the image similarity between frames when generating texture coordinates of a decimated mesh, a texture map with high image correlation between frames (i.e., maximum temporal consistency) may be re-generated. This may improve the compression performance of V-Mesh dynamic meshes, in particular, the compression performance of the texture map video of a mesh.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "... module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception device (or apparatus) including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

### [Mode for Disclosure]

As described above, related contents have been described in the best mode for carrying out the embodiments.

### [Industrial Applicability]

As described above, the embodiments may be fully or partially applied to the 3D data transmission/reception device and system. It will be apparent to those skilled in the art that various changes or modifications may be made to the embodiments within the scope of the embodiments. Thus, it is intended that the embodiments cover modifications and variations provided they come within the scope of the appended claims and their equivalents.

## Claims

1. A method of transmitting three-dimensional (3D) data, comprising:
pre-processing input mesh data;
encoding the pre-processed mesh data; and
transmitting a bitstream containing the encoded mesh data.

2. The method of claim 1, wherein the pre-processing comprises:
generating decimated mesh data by decimating the input mesh data;
generating texture coordinates of each vertex in the decimated mesh data; and
subdividing the decimated mesh data having the texture coordinates and then generating fitted subdivided mesh data similar to the input mesh data through fitting.

3. The method of claim 2, wherein the generating of the texture coordinates comprises:
segmenting polygons or vertices constituting the decimated mesh data by combining polygons or vertices having similar characteristics based on characteristics of the polygons or vertices of the decimated mesh data;
generating mesh patches of a current frame based on a set of the segmented polygons or vertices; and
packing the mesh patches of the current frame onto a two-dimensional (2D) image based on a result of packing of mesh patches of a previous frame and generating texture coordinates of each of the vertices of the decimated mesh data.

4. The method of claim 3, wherein the packing comprises:
determining whether the previous frame has a mesh patch matching a current mesh patch of the current frame; and
based on that it is determined that the previous frame has the matching mesh patch, determining a mapping position of the current mesh patch on the 2D image based on a mapping position of the matching mesh patch in the previous frame, and packing the current mesh patch onto the determined mapping position on the 2D image.

5. The method of claim 4, wherein the current mesh patch is packed onto the 2D image to have a same or close mapping position as the matching mesh patch in the previous frame.

6. The method of claim 4, wherein the mesh patches of the current frame corresponding to the matching mesh patch in the previous frame are packed onto the 2D image first.

7. The method of claim 4, wherein the determining whether the previous frame has the matching mesh patch comprises:
based on that a mesh patch of the previous frame is in the same orientation as the current mesh patch and has a similar number of polygons and/or vertices to the current mesh patch, determining that the mesh patch of the previous frame matches the current mesh patch.

8. The method of claim 4, wherein the encoding comprises:
re-generating texture coordinates based on the texture coordinates of each vertex in the decimated mesh data and the texture coordinates of each vertex in the input mesh data and performing video encoding.

9. An apparatus for transmitting three-dimensional (3D) data, comprising:
a pre-processor configured to pre-process input mesh data;
an encoder configured to encode the pre-processed mesh data; and
a transmitter configured to transmit a bitstream containing the encoded mesh data.

10. The apparatus of claim 9, wherein the pre-processor comprises:
a mesh decimation unit configured to generate decimated mesh data by decimating the input mesh data;
a parameterization unit configured to generate texture coordinates of each vertex in the decimated mesh data; and
a fitting subdivision surface unit configured to subdivide the decimated mesh data having the texture coordinates and then generate fitted subdivided mesh data similar to the input mesh data through fitting.

11. The apparatus of claim 10, wherein the parameterization unit comprises:
a polygon/vertex segmentation unit configured to segment polygons or vertices constituting the decimated mesh data by combining polygons or vertices having similar characteristics based on characteristics of the polygons or vertices of the decimated mesh data;
a mesh patch segmentation unit configured to generate mesh patches of a current frame based on a set of the segmented polygons or vertices; and
a mesh patch packer configured to pack the mesh patches of the current frame onto a two-dimensional (2D) image based on a result of packing of mesh patches of a previous frame and generating texture coordinates of each of the vertices of the decimated mesh data.

12. The apparatus of claim 11, wherein the mesh patch packer performs operations comprising:
determining whether the previous frame has a mesh patch matching a current mesh patch of the current frame; and
based on that it is determined that the previous frame has the matching mesh patch, determining a mapping position of the current mesh patch on the 2D image based on a mapping position of the matching mesh patch in the previous frame, and packing the current mesh patch onto the determined mapping position on the 2D image.

13. The apparatus of claim 11, wherein the mesh patch packing unit is configured to:
pack the current mesh patch onto the 2D image to have a same or close mapping position as the matching mesh patch in the previous frame; and
pack the mesh patches of the current frame corresponding to the matching mesh patch in the previous frame onto the 2D image first.

14. The apparatus of claim 11, wherein, based on that a mesh patch of the previous frame is in the same orientation as the current mesh patch and has a similar number of polygons and/or vertices to the current mesh patch, the mesh patch packer determines that the mesh patch of the previous frame matches the current mesh patch.

15. The apparatus of claim 11, wherein the encoder re-generates texture coordinates based on the texture coordinates of each vertex in the decimated mesh data and the texture coordinates of each vertex in the input mesh data and performs video encoding.
